# EUROPEAN PATENT APPLICATION

(11) **EP 3 988 301 A1**
(43) Date of publication of application: **27.04.2022**
(21) Application number: 20836522.1
(22) Date of filing: 08.07.2020
(51) Int. Cl.: B32B 27/30, C08F 290/00, C08F 299/00, C09D 4/02, C09D 7/63

(54) **CURABLE RESIN COMPOSITION, CURED FILM, COATED RESIN MOLDED BODY AND MULTILAYER FILM**

(30) Priority: 11.07.2019 JP 2019129158
(71) Applicant: Kyoeisha Chemical Co., Ltd., Osaka-shi, Osaka 541-0054 (JP)
(72) Inventor: MORIWAKI, Yuya, Nara-shi, Nara 630-8453 (JP); MATSUDA, Tomoya, Nara-shi, Nara 630-8453 (JP); ASADA, Kosuke, Nara-shi, Nara 630-8453 (JP); DONKAI, Masaru, Nara-shi, Nara 630-8453 (JP); TAKENAKA, Naomi, Nara-shi, Nara 630-8453 (JP); NAKAGAWA, Hiroki, Nara-shi, Nara 630-8453 (JP)
(74) Representative: Isarpatent
(86) International application number: PCT/JP2020/026678
(87) International publication number: WO 2021/006290

(57) **Abstract**

To provide a resin composition, which has both a thermosetting property and active energy curability, satisfactory performances, and excellent performances including handleability of being inexpensive without having a concern about a short pot life after blending with a thermal cross-linking agent as in the related art. The curable resin composition contains: a resin component (A) containing a (meth)acryloyl group (a), a hydroxy group (b), and an alkyl ester group (c); and an initiator (B).

## Description

### Technical Field

The present invention relates to a curable resin composition using, as a curing reaction, curing with active energy rays and a transesterification reaction, which uses a transesterification catalyst, a cured film, a coating resin molded body, and a multilayer film.

### Background Art

The inventors have studied thermosetting resin compositions using a transesterification reaction as a curing reaction (PTLs 1 and 2). Through the recent studies, it has become clear that a curing performance equivalent to that of curing using generally known melamine resins and polyisocyanate compounds can be secured by using a transesterification reaction as a curing reaction.

On the other hand, many studies have been made on curable compositions that undergo a curing reaction called dual cure. The dual cure is a method of curing the same composition with both heat and active energy rays. Use of such a method for in-mold molding and many other molding and coating is being studied.

In these dual cures, in general, an unsaturated bond photopolymerization reaction is used in curing with energy rays, and melamine curing, isocyanate curing, and general thermosetting reactions with alkoxysilane and titanate are used in curing with heat. A melamine resin and a polyisocyanate compound are widely and generally used since the thermal reactivity thereof is high and properties of the obtained cured resin are excellent. However, the melamine resin generates formaldehyde and is thus considered to cause a sick building syndrome. Therefore, in recent years, the use thereof is limited in some cases. Further, an isocyanate compound, an alkoxysilane compound and a titanate compound have high curing reaction performance but are expensive and difficult to handle because the pot-life after preparation is short. Therefore, it is considered to be preferable to find a curing agent that is inexpensive and easy to handle, and that can be cured at low temperature. Therefore, it may be possible to solve these problems by using a transesterification reaction as a curing reaction.

The above-mentioned PTLs 1 and 2 disclose thermosetting resin compositions that is cured with heat by a transesterification reaction of an alkyl ester group with a hydroxy group. However, no study has been made on dual cure by imparting an energy ray-curable function.

PTL 3 describes a resin composition that can be used for dual cure. The literature neither describes nor suggests a resin using a transesterification reaction as a thermosetting reaction.

### Citation List

### Patent Literature

PTL 1: Japanese Patent No. 6398026
PTL 2: WO 2019/069783
PTL 3: WO 2004/039856

### Summary of Invention

### Technical Problem

The present invention is contrived in view of the above-mentioned circumstances, and an object thereof is to obtain a resin composition having both a thermosetting property and active energy curability, satisfactory performances, and excellent performances including handleability of being inexpensive without having a concern about a short pot life after blending with a thermal cross-linking agent as in the related art.

### Solution to Problems

A curable resin composition according to the present invention contains:
a resin component (A) containing a (meth)acryloyl group (a), a hydroxy group (b), and an alkyl ester group (c); and an initiator (B).

It is preferable that the resin component (A) contains a compound having two or more functional groups in one molecule.

The resin component (A) may essentially contain
a compound (A-1) containing all of the (meth)acryloyl group (a), the hydroxy group (b), and the alkyl ester group (c) in one molecule.

The resin component (A) may essentially contain
a compound (A-2) having two of the (meth)acryloyl group (a), the hydroxy group (b), and the alkyl ester group (c), and
a compound (A-3) having a functional group that is not present in the compound (A-2) among the functional groups (a) to (c).

The resin component (A) may essentially contain
a compound (A-4) having the (meth)acryloyl group (a), a compound (A-5) having the hydroxy group (b), and a compound (A-6) having the alkyl ester group (c).

It is preferable that the initiator (B) contains at least a transesterification catalyst.

It is preferable that the initiator (B) further contains an active energy curing catalyst.

It is preferable that the resin component (A) is at least one compound selected from the group consisting of a radical copolymerized polymer, an addition and condensation type oligomer and a low molecular compound.

The present invention also relates to a cured film obtained by curing the resin composition with heat and active energy rays.

### Advantageous Effects of Invention

According to the present invention, both a thermosetting performance and an active energy ray curing performance can be suitably exhibited, and the curable resin composition can be suitably used in fields such as in-mold molding. That is, after being temporarily cured with heat or active energy rays, a raw material is cured with heat during final molding to produce a desired cured film (the curing order may be reversed depending on the purpose). The raw material can be wound around a roll during temporary curing or taken out as a sheet, and cured as a flexible film during final molding for use. Alternatively, in a case of curing with active energy rays, even if a part not exposed to light is generated, the part can be cured with heat. Further, the cured film can also be used for adhesion, re-peeling, etc. by greatly changing physical properties of the cured film during temporary curing and final curing. Furthermore, at a stage where only one of curing with heat and curing with active energy rays is performed, an elastic modulus is higher than that before curing, but the elastic modulus is not as high as when the curing is completely completed. Therefore, a cured product having a high elastic modulus can be obtained by processing at this stage and then completely curing.

### Description of Embodiments

Hereinafter, the present invention will be described in detail.

It is to be noted that in the present specification, a "(meth)acryloyl group" means a "methacryloyl group" or an "acryloyl group".

A curable resin composition according to the present invention essentially contains a resin component (A) containing a (meth)acryloyl group (a), a hydroxy group (b), and an alkyl ester group (c).

Among them, an unsaturated bond in the (meth)acryloyl group (a) causes a cross-linking reaction by active energy rays, and the hydroxy group (b) and the alkyl ester group (c) cause a cross-linking reaction by a transesterification reaction. The curable resin composition according to the present invention can be a resin composition that causes these two types of curing reactions, and thus can be suitably used in applications such as in-mold molding in which it is necessary to cause deformation after being cured to a certain degree and finally to obtain a cured product having sufficient hardness.

In the related art, a thermosetting reaction is caused in such a dual cure type curable resin composition by a thermosetting curing agent such as an isocyanate compound, a melamine resin, an epoxy compound, an alkoxysilane, or an alkoxytitanium.

The present invention is characterized in that a transesterification reaction is used as a curing reaction in the dual cure type curable resin composition. Thus, a curable resin composition having excellent stability can be obtained. That is, a resin composition using transesterification as a curing reaction is preferable in that the resin composition can be stored without causing curing because of having high stability.

Further, it is particularly preferable in the present invention that the resin composition is a low temperature curable resin composition having a thermosetting start temperature of, for example, 130°C. It is easy to use such a low temperature curable resin composition in combination with a resin.

That is, the following is frequently performed that a dual cure type curable resin composition is applied to a molded body of a thermoplastic resin composition such as a resin film or an injection molded body to form a film, and the film is cured to obtain a molded body having the film.

In this case, it is necessary to sufficiently cure the resin with heat at a temperature equal to or lower than a heat-resistant temperature of the resin. Therefore, it is difficult to perform the treatment on a resin molded body having relatively low heat resistance. The curable composition according to the present invention using a transesterification reaction as an exchange reaction is particularly preferable in terms of solving the problems since the curable resin composition can be a low temperature curable composition.

In the present invention, the resin component needs to contain the functional groups (a) to (c) described above. The resin component may be a composition in which a compound having each of the functional groups is mixed or may be a composition in which a compound having two or more of the functional groups (a) to (c) are used as necessary such that all the functional groups are contained in the composition.

The resin component of the present invention may be a composition containing a resin as an essential component, or may be a composition of a low molecular weight compound to be a resin by being cured with heat and being cured with energy rays. It is preferable that the resin component of the present invention contains a compound having two or more functional groups in one molecule. The "compound having two or more functional groups" mentioned herein refers to a compound having two or more functional groups selected from the group consisting of the functional groups (a) to (c). Here, the compound may have two or more of the same type of functional group, or may have two or more of two or more types of functional groups. In particular, a compound having only one (b) or one (c) acts as an end-capping agent, and is thus preferably not used, and even used, the compound is preferably used in an amount of 20% by weight or less. A compound having only one (a) does not act as an end-capping agent, and thus may be used in part. However, from the viewpoint of obtaining a cured resin having a high crosslink density, it is preferable that the mixing amount is small. Specifically, the compound having only one (a) is preferably contained in the resin component (A) in an amount of 40% by weight or less.

That is, the resin component (A) may be in any form of:
(I) a component essentially containing a compound (A-1) containing all of the (meth)acryloyl group (a), the hydroxy group (b), and the alkyl ester group (c) in one molecule,
(II) a component essentially containing a compound (A-2) having two of the (meth)acryloyl group (a), the hydroxy group (b), and the alkyl ester group (c), and a compound (A-3) having a functional group that is not present in the compound (A-2) among the functional groups (a) to (c); and
(III) a component essentially containing a compound (A-4) having the (meth)acryloyl group (a), a compound (A-5) having the hydroxy group (b), and a compound (A-6) having the alkyl ester group (c).

Further, the above-mentioned (A-1) may be used in combination with any component of the (A-2) to the (A-6), and the (A-2) may be used in combination with any of the (A-4) to the (A-6).

A compound having both a (meth)acryloyl group and a hydroxy group is known as an acrylate compound. Such a compound can be suitably used in the present invention as a compound having both the functional group (a) and the functional group (b).

A compound having both a (meth)acryloyl group and an alkyl ester group is also known. When such a compound is used, the compound can be suitably used in the present invention as a compound having both the functional group (a) and the functional group (c).

Further, a compound having both a hydroxy group and an alkyl ester group is also known. Such a compound can be suitably used in the present invention as a compound having both the compound (b) and the compound (c).

Similarly, a compound having all of the (meth)acryloyl group, the hydroxy group and the alkyl ester group can also be suitably used in the present invention.

In short, the whole resin composition according to the present invention needs to have the functional groups (a) to (c), and the form in which these functional groups are introduced into the resin composition is not particularly limited.

It is preferable that the resin component (A) is at least one compound selected from the group consisting of a radical copolymerized polymer, an addition and condensation type oligomer, and a low molecular compound. That is, it is preferable to use a radical copolymerized polymer such as an acrylic resin, an addition and condensation type oligomer such as a polyester resin, and a low molecular weight compound having a molecular weight of 6,000 or less (more preferably 4,000 or less, and still more preferably 2,000 or less). Two or more of the above substances may be used in combination. In addition, the curable resin composition according to the present invention contains a mixture of low molecular weight compounds that can be cured into a resin, as long as it can be in a resin state after curing.

It is preferable not to use a compound having only one of the functional groups of a hydroxy group and an alkyl ester group. It is preferable to use a compound having a total of two or more functional groups of a hydroxy group and an alkyl ester group, or a compound having a (meth)acryloyl group and a hydroxy group and/or an alkyl ester group.

A compound having only one hydroxy group or one alkyl ester group as a functional group cannot form a chain structure, which may hinder the curing reaction.

Hereinafter, compounds having the functional groups will be described in detail. It is to be noted that the following description is intended to be illustrative, and the compounds used in the present invention are not limited to those described below.

### Compound having (meth)acryloyl group (a)

Many compounds known as an energy ray-curable compound can be used as the compound having the (meth)acryloyl group (a).

Examples of a (meth)acrylate having a functional group include methyl (meth)acrylate, ethyl (meth)acrylate, isopropyl (meth)acrylate, n-butyl (meth)acrylate, isobutyl (meth)acrylate, sec-butyl (meth)acrylate, and t-butyl (meth)acrylate.

Examples of a (meth)acrylate having two functional groups include 1,4-butanediol di(meth)acrylate, 1,3-butanediol di(meth)acrylate, 1,6-hexanediol di(meth)acrylate, ethylene glycol di(meth)acrylate, diethylene glycol di(meth)acrylate, triethylene glycol di(meth)acrylate, polyethylene glycol di(meth)acrylate, dipropylene glycol di(meth)acrylate, tripropylene glycol di(meth)acrylate, polypropylene glycol di(meth)acrylate, neopentyl glycol di(meth)acrylate, hydroxypivalic acid neopentylglycol di(meth)acrylate, 1,6-hexanediol di(meth)acrylate, 1,9-nonanediol di(meth)acrylate, 1,10-decanediol di(meth)acrylate, glycerin di(meth)acrylate, dimethylol-tricyclodecane di(meth)acrylate (DCP-A), EO adduct diacrylate of bisphenol A (Kyoeisha Chemical Co., Ltd.; Light Acrylate BP-4EA, BP-10EA), and PO adduct diacrylate of bisphenol A (Kyoeisha Chemical Co., Ltd.; BP-4PA, BP-10PA). Among them, PO adduct diacrylate of bisphenol A (Kyoeisha Chemical Co., Ltd.; BP-4PA), dimethylol-tricyclodecane di(meth)acrylate (DCP-A) and the like can be preferably used.

Examples of a (meth)acrylate having three functional groups include trimethylolmethane tri(meth)acrylate, trimethylolpropane tri(meth)acrylate, trimethylolpropane ethylene oxide-modified tri(meth)acrylate, trimethylolpropane propylene oxide-modified tri(meth)acrylate, pentaerythritol tri(meth)acrylate, glycerin propoxy tri(meth)acrylate, and tris(2-(meth)acryloyloxyethyl) isocyanurate. Among them, trimethylolpropane trimethacrylate, pentaerythritol trimethacrylate and the like can be preferably used.

Examples of a (meth)acrylate having four functional groups include dipentaerythritol tetra(meth)acrylate, pentaerythritol tetra(meth)acrylate, pentaerythritol ethylene oxide-modified tetra(meth)acrylate, pentaerythritol propylene oxide-modified tetra(meth)acrylate, and ditrimethylolpropane tetra(meth)acrylate. Among them, ditrimethylolpropane tetra(meth)acrylate, pentaerythritol tetra(meth)acrylate and the like can be preferably used.

Examples of a (meth)acrylate having four or more functional groups include polyfunctional (meth)acrylates such as pentaerythritol tetra(meth)acrylate, pentaerythritol ethylene oxide-modified tetra(meth)acrylate, ditrimethylolpropane tetra(meth)acrylate, dipentaerythritol tetra(meth)acrylate, dipentaerythritol penta(meth)acrylate, ditrimethylolpropane penta(meth)acrylate, propionic acid-modified dipentaerythritol penta(meth)acrylate, dipentaerythritol hexa(meth)acrylate, ditrimethylolpropane hexa(meth)acrylate, and hexa(meth)acrylate of caprolactone modified dipentaerythritol.

Further, a compound represented by the following general formula can also be used as the compound having the (meth)acryloyl group (a). 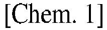 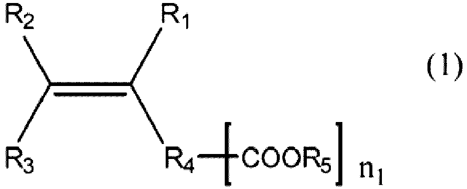 n₁: 1 to 10
(In the formula, R₁, R₂, and R₃ are the same as or different from each other, and each represents hydrogen, an alkyl group, a carboxyl group, an alkyl ester group or a structure represented by the R₄-[COOR₅]n₁.

R₄ is an aliphatic, alicyclic or aromatic alkylene group having 50 or less atoms in the main chain, which may have one or more functional groups selected from the group consisting of an ester group, an ether group, an amide group, and a urethane and may have a side chain.

R₅ is an alkyl group having 50 or less carbon atoms.

In the compound represented by the General Formula (1), the R₄-[COOR₅]n₁ group may be a lactone structure represented by the following General Formula (1-1).)

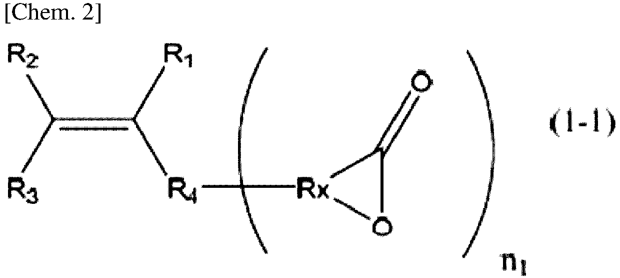

(Rx is a hydrocarbon group having 2 to 10 carbon atoms which may have a branched chain.)

The compound is a compound having both an unsaturated group and an alkyl ester group, and can also be used as a raw material for the following polymer having an alkyl ester group. Accordingly, details will be described in the following part.

Further, a compound represented by the following General Formula (2) can also be used as the compound having the (meth)acryloyl group (a). 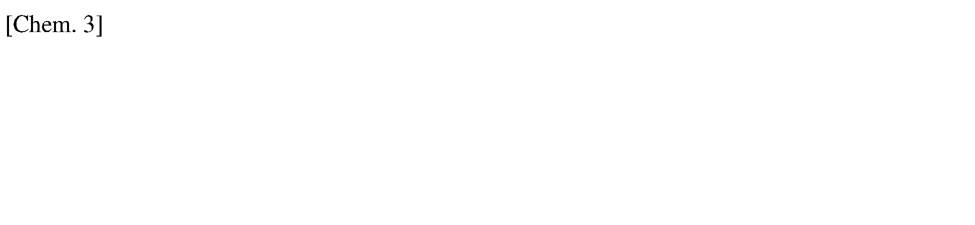 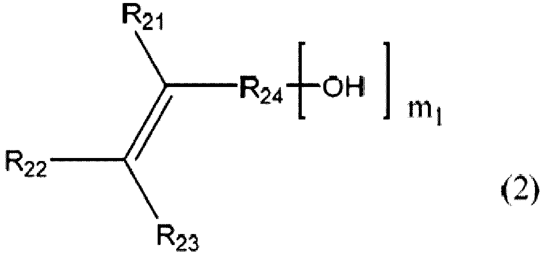 m₁: 1 to 10
(In the formula, R₂₁, R₂₂, and R₂₃ are the same as or different from each other and each is hydrogen, an alkyl group, a carboxyl group, an alkyl ester group or a structure represented by the following R₂₄-[OH]ₘ₁.

R₂₄ is an aliphatic, alicyclic or aromatic alkylene group having 3 or more and 50 or less atoms in the main chain, which may have one or more functional groups selected from the group consisting of an ester group, an ether group, an amide group, and a urethane and may have a side chain.)

The compound is a compound having both an unsaturated group and a hydroxy group, and can also be used as a raw material for the following polymer having a hydroxy group. Accordingly, details will be described in the following part.

Further, a compound having a (meth)acryloyl group in the molecule and having a viscosity of 100 Pa·s (25°C) or more can also be used. It is preferable that such a compound has a number average molecular weight of more than 800 as a molecular weight.

A large number of types of compounds are known as such a compound. Among them, a (meth)acrylic ester of an aromatic epoxide having a hydroxy group in the molecule and a urethane acrylic resin (urethane prepolymer) having a urethane group in the molecule are preferable. More specifically, examples of such a compound include a bisphenol A diglycidyl ether (meth)acrylic acid adduct (for example, Epoxy Ester 3000A manufactured by Kyoeisha Chemical Co., Ltd.), a pentaerythritol tri(meth)acrylate hexamethylene diisocyanate urethane prepolymer (for example, UA-306H manufactured by Kyoeisha Chemical Co., Ltd., a bisphenol A PO 2 mol adduct diglycidyl ether acrylic acid adduct (for example, Epoxy Ester 3002A manufactured by Kyoeisha Chemical Co., Ltd.), a pentaerythritol triacrylate toluene diisocyanate urethane prepolymer (for example, UA-306T manufactured by Kyoeisha Chemical Co., Ltd.), a pentaerythritol triacrylate isophorone diisocyanate urethane prepolymer (for example, UA-306I manufactured by Kyoeisha Chemical Co., Ltd.), UF-8001G, and BPZA-66.

Further, compounds having an unsaturated bond introduced to various polyol compounds such as a vinyl-based polymer having a hydroxy group by reacting with a compound having an isocyanate group and an unsaturated bond can be used.

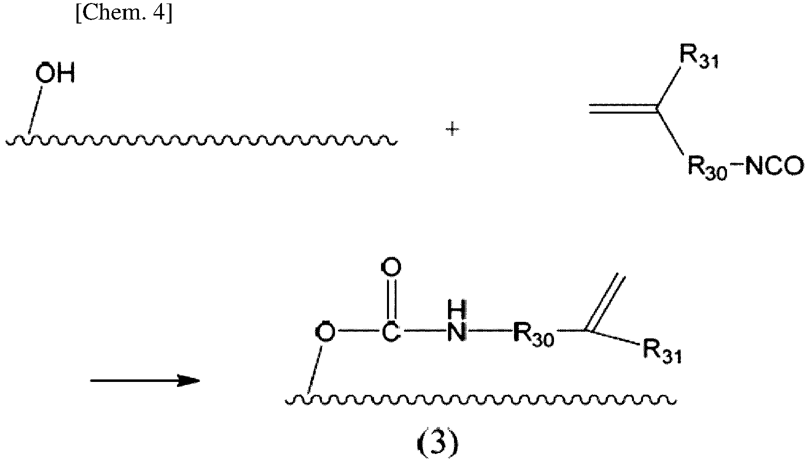

Specifically, an unsaturated group-containing compound obtained by the above reaction can also be used.

A compound having an isocyanate group and a polymerizable unsaturated group that can be used in the reaction is not particularly limited, and examples thereof include a compound represented by the following General Formula (4). 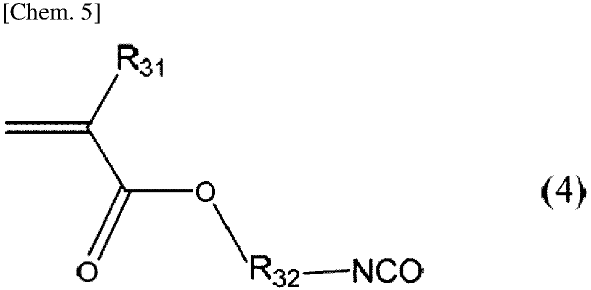 (In the formula, R₃₂ is a hydrocarbon group having 1 to 20 carbon atoms.

R₃₁ is H or a methyl group.)

More specifically, examples thereof include 2-isocyanatoethyl acrylate, which is sold under the trade name of Karenz AOI (registered trademark) manufactured by Showa Denko K.K.

The polyol compound is not particularly limited, and various hydroxy group-containing compounds such as known polymers having an acrylic polyol, polyester polyol, polycarbonate polyol, polyurethane polyol, and polyvinyl alcohol unit can be used.

Further, a compound having an unsaturated group introduced to an epoxy group-containing polymer by reacting with (meth)acrylic acid can also be used.

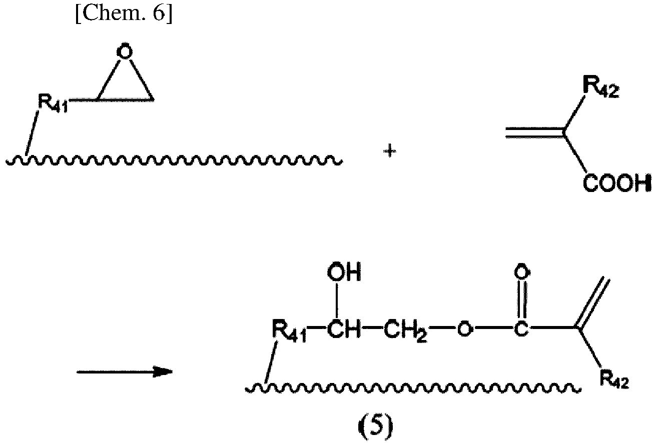

Specifically, an unsaturated group-containing compound obtained by the above reaction can also be used.

The epoxy-containing compound that can be used in the reaction is not particularly limited, and in addition to various epoxy resins such as a bisphenol-based epoxy epoxy resin and a novolac-based epoxy resin, and examples of the epoxy-containing compound include an acrylic polymer containing glycidyl (meth)acrylate as a part of a monomer.

The polymers represented by the General Formulas (4) and (5) may further have a hydroxy group and/or an alkyl ester group.

### Compound having hydroxy group (b) and/or alkyl ester group (c)

In the present invention, a cross-linking reaction is caused by causing transesterification by heating. Accordingly, the hydroxy group (b) and/or the alkyl ester group (c) are essential. Here, a compound having a (meth)acryloyl group and the hydroxy group (b) and/or the alkyl ester group (c) that can be used in the curable resin composition according to the present invention is as described above.

Therefore, a compound having no (meth)acryloyl group and having the hydroxy group (b) and/or the alkyl ester group (c) will be described below in detail.

The alkyl ester group (c) in the present invention has a structure represented by -COOR. In the formula, R can be an alkyl group having 50 or less carbon atoms. The alkyl group more preferably has 20 or less carbon atoms, still more preferably has 10 or less carbon atoms, and most preferably has 5 or less carbon atoms.

The alkyl ester group (c) may be any one of primary, secondary, and tertiary alkyl ester groups. However, the primary and secondary alkyl ester groups are particularly preferable from the viewpoints of high reactivity (low-temperature curability), water systemization, and ease of monomer synthesis. A tertiary alkyl ester has high curing reactivity, but has a disadvantage of tending to cause problems such as poor appearance and deterioration of physical properties due to foaming.

Hereinafter, examples of resins and low molecular weight compounds that can be used in the present invention will be described. The present invention is not limited to those using the following resins and low molecular weight compounds, and the following examples and compounds having the functional group can be used by being appropriately combined as necessary.

### (1) Polymer obtained by polymerization of unsaturated bonds

Polymers, such as acrylic resins, which are obtained by polymerization of unsaturated bonds are resins commonly used in the fields of thermosetting resins such as coating materials and adhesives. When a monomer having a hydroxy group or an alkyl ester group is used, these functional groups are present in a resin in a proportion of the monomer used. Therefore, it is easy to control the amount of functional groups in the resin and adjust the physical properties of the resin, and it can be easily used for the object of the present invention.

In particular, in a case of introduction, a hydroxy group and an alkyl ester group can be introduced by using the following monomers (1-1) and (1-2).

### (1-1) Hydroxy group-containing monomer

The hydroxy group-containing monomer is not particularly limited, and examples thereof include the following.

Various hydroxy group-containing vinyl ethers such as 2-hydroxyethyl vinyl ether, 3-hydroxypropyl vinyl ether, 2-hydroxypropyl vinyl ether, 4-hydroxybutyl vinyl ether, 3-hydroxybutyl vinyl ether, 2-hydroxy-2-methylpropyl vinyl ether, 5-hydroxypentyl vinyl ether, or 6-hydroxyhexyl vinyl ether; or addition reaction products of these various vinyl ethers mentioned above and ε-caprolactone;
various hydroxy group-containing allyl ethers such as 2-hydroxyethyl (meth)allyl ether, 3-hydroxypropyl (meth)allyl ether, 2-hydroxypropyl (meth)allyl ether, 4-hydroxybutyl (meth)allyl ether, 3-hydroxybutyl (meth)allyl ether, 2-hydroxy-2-methylpropyl (meth)allyl ether, 5-hydroxypentyl (meth)allyl ether, or 6-hydroxyhexyl (meth)allyl ether; or addition reaction products of these various allyl ethers mentioned above and ε-caprolactone;
or various hydroxy group-containing (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, polyethylene glycol mono(meth)acrylate, or polypropylene glycol mono(meth)acrylate; or addition reaction main components of these various (meth)acrylates mentioned above and ε-caprolactone.

In addition, in a case where the hydroxy group-containing monomer as a monomer does not directly have a hydroxy group, but the hydroxy group-containing monomer has a hydroxy group via a linking group having 5 or more molecules, the hydroxy group easily moves in the resin, which is preferable in that a reaction easily occurs.

### (1-2) Alkyl ester group-containing monomer

As the alkyl ester group-containing monomer, an extremely large number of types of monomers having alkyl ester groups and polymerizable unsaturated bonds are known. Typical examples thereof include compounds represented by the following general formula.

### (1-2-a)

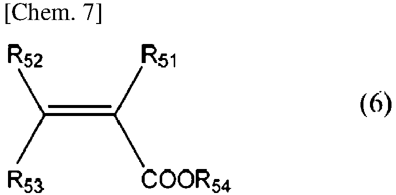

(In the formula, R₅₁, R₅₂, and R₅₃ represent hydrogen, an alkyl group, a carboxyl group, and an alkyl ester group, and

R₅₄ represents a hydrocarbon group having 50 or less carbon atoms.)

Such a compound represented by the General formula (6) may be an ester derivative of a known unsaturated carboxylic acid such as (meth)acrylic acid, crotonic acid, itaconic acid, maleic acid or fumaric acid.

The most typical example of the monomer having an alkyl ester group and a polymerizable unsaturated bond represented by the General Formula (6) is an ester of (meth)acrylic acid and an alcohol, and examples thereof include methyl (meth)acrylate, ethyl (meth)acrylate, n-propyl (meth)acrylate, benzyl (meth)acrylate, isopropyl (meth)acrylate, n-butyl (meth)acrylate, isobutyl (meth)acrylate, sec-butyl (meth)acrylate, and t-butyl (meth)acrylate.

Among them, a tertiary alkyl ester such as t-butyl (meth)acrylate is most preferable from the viewpoint of reactivity of crosslinking. In a structural unit derived from the compound represented by the General Formula (6), a tertiary alkyl ester is most preferably used because a primary or secondary alkyl ester has a low transesterification reaction rate.

Since t-butyl (meth)acrylate is an ester of tertiary alkyl, the transesterification reaction rate is fast, and therefore the curing reaction proceeds efficiently. Therefore, it is a very preferable raw material, which is superior in crosslinking reactivity to the primary alkyl ester or the secondary alkyl ester, for donating an ester group to achieve the object of the present invention.

Also, Tg may be adjusted by copolymerizing t-butyl (meth)acrylate with other monomers described in detail below. In this case, it is preferable to set Tg at 80°C or lower.

However, although a polymer having a structure derived from such t-butyl (meth)acrylate has an excellent curing performance, foaming tends to occur during curing, which tends to cause deterioration of appearance. Therefore, in applications where appearance performance is required, those using the monomers described in detail below are more preferable than the monomer represented by the General Formula (6).

### (1-2-b)

1-2-b is a polymer having a monomer represented by the following General Formula (1) as a partial or entire structural unit. 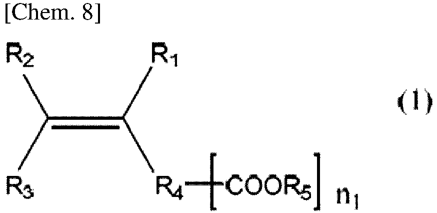 n₁: 1 to 10

(In the formula, R₁, R₂, and R₃ are the same as or different from each other, and each represents hydrogen, an alkyl group, a carboxyl group, an alkyl ester group or a structure represented by the R₄-[COOR₅]n₁.

R₄ is an aliphatic, alicyclic or aromatic alkylene group having 50 or less atoms in the main chain, which may have one or more functional groups selected from the group consisting of an ester group, an ether group, an amide group, and a urethane and may have a side chain.

R₅ is an alkyl group having 50 or less carbon atoms.

In the compound represented by the General Formula (4), the R₄-[COOR₅]n₁ group may be a lactone structure represented by the following General Formula (1-1).)

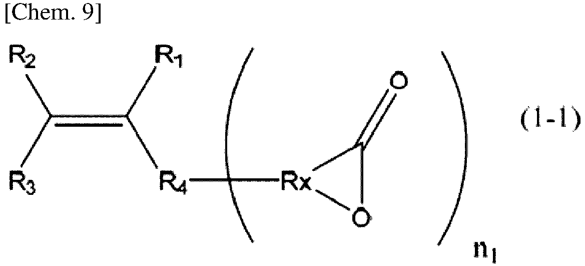

(Rx is a hydrocarbon group having 2 to 10 carbon atoms which may have a branched chain.)

It is preferable that the monomer represented by the General Formula (1) have a primary or secondary alkyl ester. The primary or secondary alkyl ester group derived from such a monomer easily causes a reaction with a hydroxy group, and can satisfactorily cause a transesterification reaction.

A polymer can be obtained by a polymerization reaction via an unsaturated bond of the compound. In the case where the polymer thus obtained is used in a curable resin composition using a transesterification reaction as a curing reaction, the main chain formed based on the polymerization of the unsaturated bond and the alkyl ester group are present apart from each other via a linking group. Therefore, the alkyl ester group can move relatively freely. As a result, it has been found by the present inventors that the alkyl ester group and the hydroxy group are easily accessible, and the reactivity of transesterification is improved. By improving the reactivity of the transesterification reaction in this manner, short-time curing and reduction in curing temperature can be realized, and the usefulness of the curable resin composition by the transesterification reaction can be enhanced.

In addition, in the compound represented by the General Formula (1), when the alkyl ester group is a t-butyl ester group, a t-butyl group desorbed during heat curing generates a gas component presumed to contain isobutene a main component. Accordingly, it has been known that bubbles are generated in a cured resin, which may cause various problems such as deterioration in appearance and deterioration in strength. Therefore, when the compound represented by the General Formula (1) is used, it is preferable that a primary or secondary alkyl ester is contained to solve such a problem. From such a viewpoint, it is preferable that the composition according to the present invention does not have a t-butyl group, but the composition may have a t-butyl group as long as the problem does not occur.

When the unsaturated group-containing ester compound of the present invention is used, it is presumed that a decrease in viscosity of a coating film during curing prevents foaming, and the problems are remarkably solved. Also in this respect, the present invention has a suitable effect.

The alkyl ester group is not particularly limited, and those having known alkyl groups such as a methyl ester group, an ethyl ester group, a benzyl ester group, an n-propyl ester group, an isopropyl ester group, an n-butyl ester group, an isobutyl ester group, and a sec-butyl ester group can be used. It is preferable that the alkyl group has 50 or less carbon atoms. Since the alkyl group is formed as an alcohol during the transesterification reaction and is preferably volatilized, the alkyl group is more preferably one having 20 or less carbon atoms, and still more preferably 10 or less carbon atoms. The boiling point of the alcohol volatilizing in the curing reaction is preferably 300°C or lower, and more preferably 200°C or lower.

The alkyl group in the alkyl ester group (that is, R₅ in the general formula) is an alkyl group having 50 or less carbon atoms, and the number of carbon atoms is preferably within the range of 1 to 20, more preferably within the range of 1 to 10, still more preferably within the range of 1 to 6, and most preferably within the range of 1 to 4. Such a range is preferable in that the curing reaction can proceed suitably. In addition, a primary or secondary alkyl group is more preferable from the viewpoints of obtaining a low-temperature curing performance and reducing foaming.

The case where the alkyl ester group is a lactone group is also included in the present invention. Such a lactone group as an ester group can also cause the transesterification reaction of the present invention and can be utilized for curing reactions. Such a compound has the chemical structure of the above-mentioned (1-1).

More specifically, as the structure represented by the General Formula (1), for example, the following structure can be mentioned. 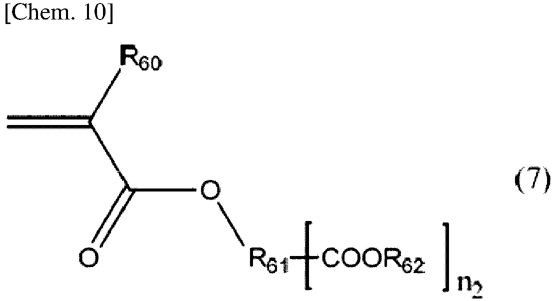
n₂: 1 to 10
(In the formula, R₆₀ is H or a methyl group.

R₆₁ is an alkylene group having 48 or less atoms in the main chain, which may have an ester group, an ether group and/or an amide group in the main chain, and may have a side chain.

R₆₂ is an alkyl group having 50 or less carbon atoms.)

Such a compound is a derivative of (meth)acrylic acid and can be obtained by a known synthesis method using (meth)acrylic acid or a derivative thereof as a raw material.

The number of atoms in the main chain of the above-mentioned R₆₁ is more preferably 40 or less, still more preferably 30 or less, and even more preferably 20 or less. The atom that may be contained in the main chain of R₆₁ is not particularly limited, and an oxygen atom, a nitrogen atom, a sulfur atom, a silicon atom and the like in addition to a carbon atom may be contained. More specifically, in the main chain of R₆₁, an ether group, an ester group, an amino group, an amide group, a thioether group, a sulfonate group, a thioester group, a siloxane group, and the like in addition to an alkyl group may be contained.

Specific examples of structures represented by the General Formula (7) include compounds represented by the following General Formula (8). 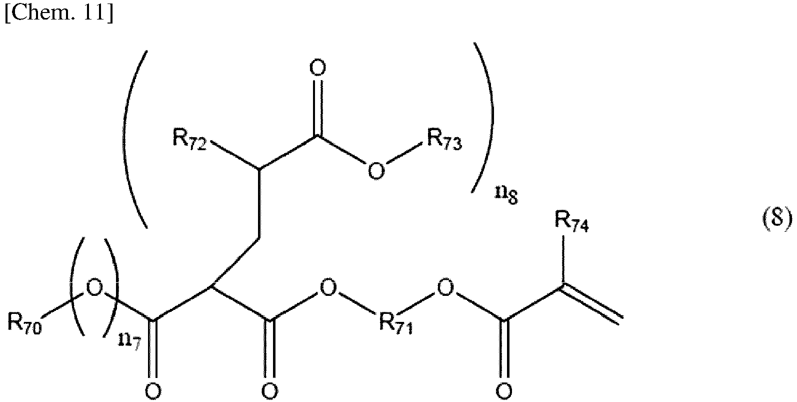 (In the formula, R₇₀ is an alkyl group having 1 to 50 carbon atoms.

R₇₁ is an alkylene group having 44 or less atoms in the main chain, which may have an ester group, an ether group and/or an amide group in the main chain, and may have a side chain.

R₇₂ is H or a methyl group.

R₇₃ is an alkyl group having 50 or less carbon atoms

R₇₄ is H or a methyl group.

n₇ is 0 or 1.

n₈ is 1 or 2.)

The compound represented by the General Formula (8) is a compound synthesized by reacting a compound that generates an active anion such as a malonic acid ester or an acetoacetic acid ester having an unsaturated bond in the molecule with an unsaturated compound having an alkyl ester group.

That is, the malonic acid ester or the acetoacetic acid ester has a methylene group interposed between carboxy carbons, and this methylene group is easily anionized and widely known as a group that readily causes an anion reaction. A compound having an unsaturated bond in the alkyl group of the malonic acid ester or the acetoacetic ester (for example, ester compounds of malonic acid or acetoacetic acid with an unsaturated monomer having a hydroxy group as detailed below as a "hydroxy group-containing monomer") is reacted with an alkyl ester compound having an unsaturated group to synthesis a compound having both an unsaturated group and an alkyl ester group.

Only the alkyl ester group in the compound having such a structure can be easily changed by using a raw material used widely, and as a result, the curing reactivity can be easily adjusted. In addition, it is particularly preferable in that the curing reactivity can be adjusted by changing the reaction ratio to an active methylene group.

The compound which can be used as the "alkyl ester compound having an unsaturated group" used in the reaction is not particularly limited, and examples thereof include a (meth)acrylic acid alkyl ester, a methylene malonic acid alkyl ester, a lactone compound having an unsaturated group (for example, γ-crotonolactone, 5,6-dihydro-2H-pyran-2-one) and the like can be used.

The reaction can be carried out under basic conditions, and for example, can be carried out in an organic solvent in the presence of a crown ether of an alkali metal salt.

An example of such a synthesis reaction is shown below.

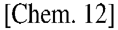

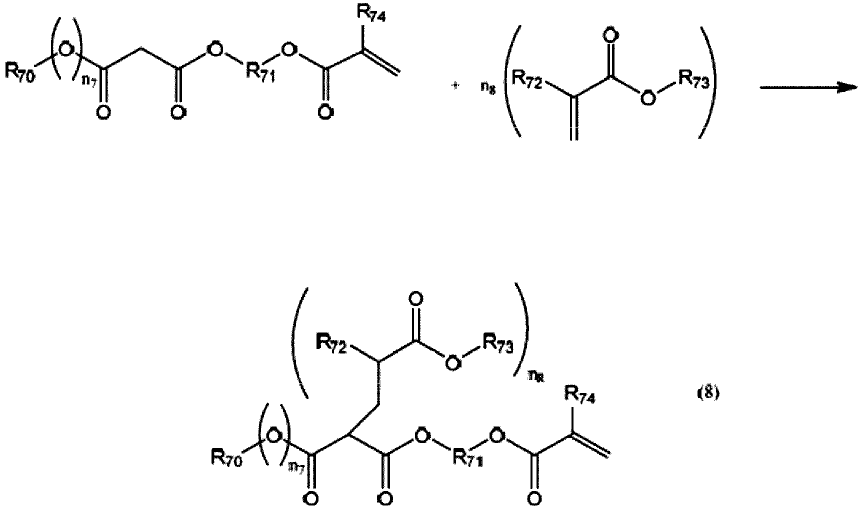

In addition, an alkyl ester compound represented by the General Formula (1) can also be obtained by esterification of a carboxylic acid corresponding to the compound.

That is, a compound represented by the following General Formula (9) is a carboxylic acid corresponding to the alkyl ester compound represented by the General Formula (1). 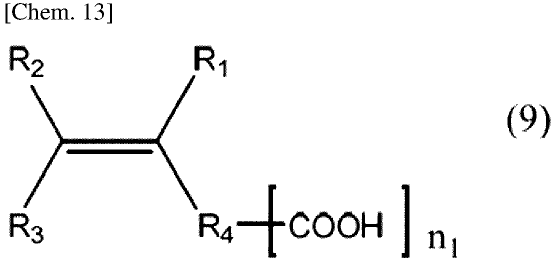 n₁: 1 to 10

(In the formula, R₁, R₂, and R₃ are the same as or different from each other, and each represents hydrogen, an alkyl group, a carboxyl group, an alkyl ester group or a structure represented by the R₄-[COOR₅]n₁.

R₄ is an aliphatic, alicyclic or aromatic alkylene group having 50 or less atoms in the main chain, which may have one or more functional groups selected from the group consisting of an ester group, an ether group, an amide group, and a urethane and may have a side chain.

There is a known compound as the compound represented by the General Formula (9). Such a known compound can also be subjected to a normal esterification reaction (for example, a reaction with an alcohol corresponding to an alkyl group of a target alkyl ester) to become an unsaturated group-containing ester compound of the present invention.

Examples of specific chemical structures of compounds that can be synthesized by the methods exemplified above are shown below. It is to be noted that the present invention is not limited to the compounds exemplified below.

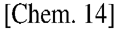

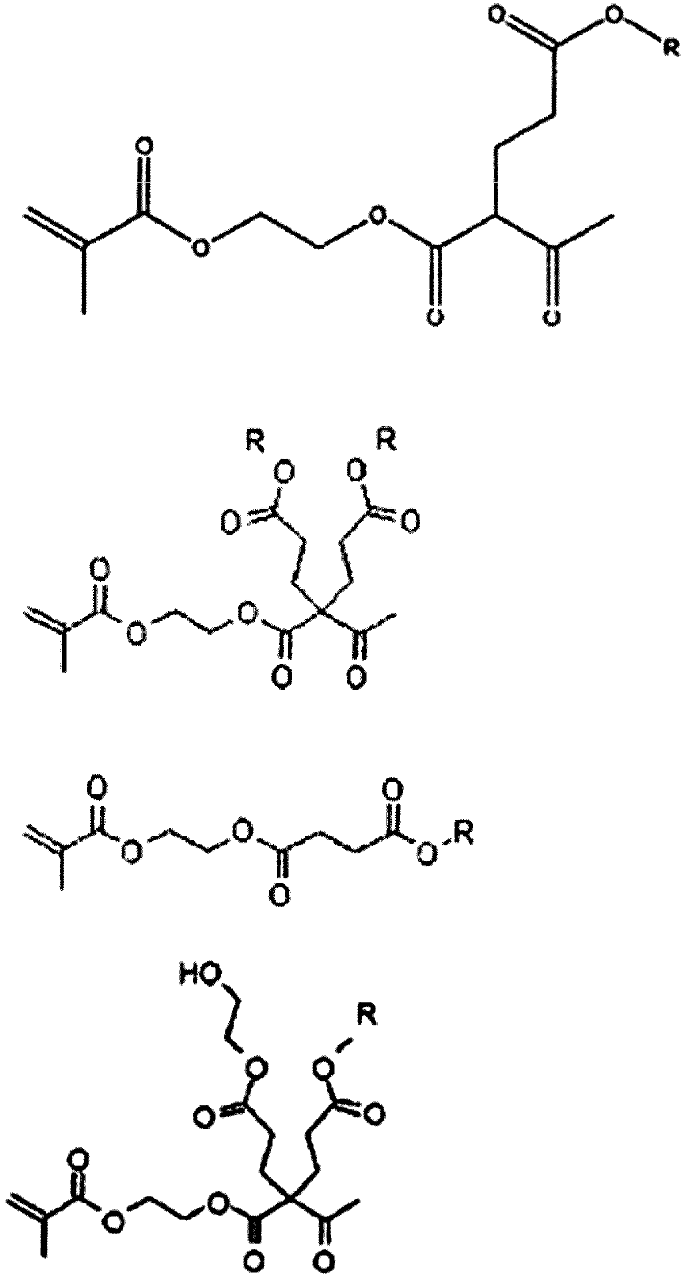

(In the general formulas, R is an alkyl group having 50 or less carbon atoms.)

Also in the compounds represented by the general formulas, R in the general formulas is an alkyl group having 50 or less carbon atoms, and the number of carbon atoms is preferably within the range of 1 to 20, more preferably within the range of 1 to 10, still more preferably within the range of 1 to 6, and most preferably within the range of 1 to 4. Such a range is preferable in that the curing reaction can proceed suitably.

### (1-2-b-X)

The compound represented by the General Formula (7) may be a compound having a functional group represented by the following General Formula (31) and an unsaturated group. 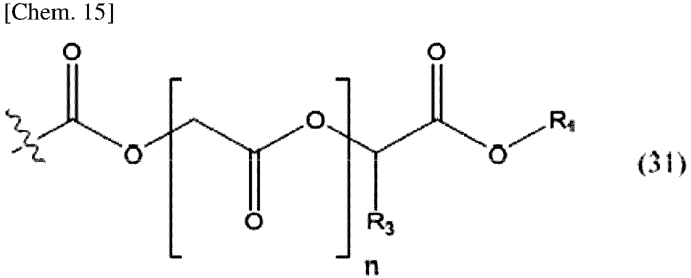 n=0 to 20

R₁ is an alkyl group having 50 or less carbon atoms.

R₃ is hydrogen or an alkyl group having 10 or less carbon atoms.

That is, in the compound represented by the General Formula (4), a COOR₁₂ group may have a structure as represented by the General Formula (31).

An ester group represented by the General Formula (31) has high reactivity in a transesterification reaction for unknown reasons. Therefore, a curable resin composition having a more excellent curing performance than that in the related art can be obtained by using an ester compound having the functional group as a part or the entirety of a resin component.

### (Regarding structure of General Formula (31))

The structure of the General Formula (31) is based on an α-substituted carboxylic acid ester skeleton.

In the General Formula (31), n is 0 to 20.

A lower limit of n is more preferably 1. An upper limit of n is more preferably 5.

Further, the compound may be a mixture of a plurality of components having different values of n in the General Formula (31). In this case, an average value nav of n is preferably 0 to 5. A lower limit of nav is more preferably 1. An upper limit of nav is more preferably 3. The measurement of nav can be performed by NMR analysis. Further, the value of n can also be measured by NMR analysis.

n may be 0, and it is preferable that the value of n exceeds 0 because an aqueous curable resin composition having higher reactivity can be obtained.

That is, when n is 1 or more, it is possible to achieve curing at a lower temperature and more suitably exhibit the effects of the present invention.

In the General Formula (31), any alkyl group having 50 or less carbon atoms can be used as R₁, and may be any one of primary, secondary, and tertiary alkyl groups.

A compound having the functional group (31) can be obtained by reacting an ester compound with a carboxylic acid or a carboxylic acid salt compound corresponding to the structure of a target compound, the ester compound being a compound in which an active group X is introduced at an α-position of a carbonyl group having the structure of the following General Formula (32).

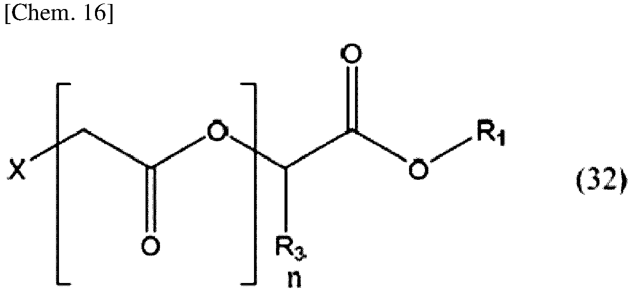

(In the formula, X represents halogen or a hydroxy group.)

The above reaction is represented by general formulas as follows.

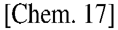

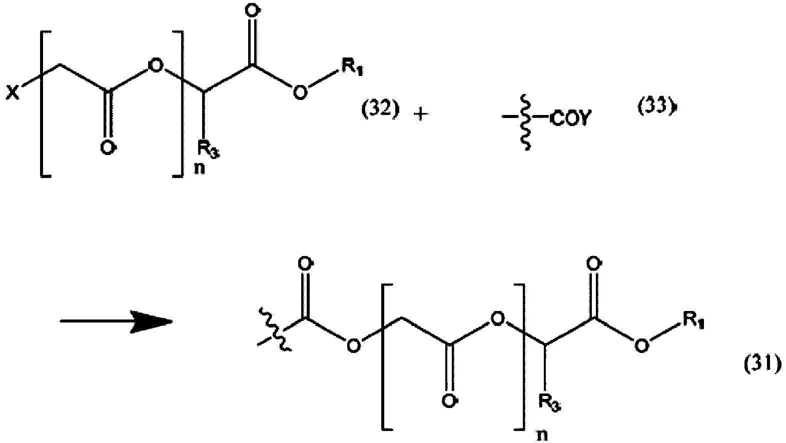

In the general formula, the reaction can be performed on any carboxylic acid when a compound that can be used as a raw material represented by the General Formula (33) is a carboxylic acid or a carboxylic acid derivative that can cause the reaction. Examples of the carboxylic acid derivative include those in which Y is OM (carboxylic acid salt), OC=OR (anhydride), and Cl (acid chloride). In the case of the carboxylic acid salt of Y=OM, examples of the carboxylic acid salt include a sodium salt, a potassium salt, an amine salt, and a zinc salt. In a case of being used as a monomer of a polymer, a compound having an unsaturated group can be used as the compound represented by the General Formula (33).

The compound represented by the General Formula (32) can be a compound having a skeleton corresponding to a target structure represented by the General Formula (31).

In addition, a method of manufacturing the compound represented by the General Formula (32) is not particularly limited. Among compounds represented by the General Formula (32), a compound of n=0 is a compound having an active group represented by X at an α-position, and examples thereof include various α-hydroxy acids and α-halogenated carboxylic acids. Specifically, examples thereof include methyl chloroacetate, ethyl chloroacetate, methyl bromoacetate, ethyl bromoacetate, t-butyl bromoacetate, methyl 2-chloropropionate, methyl glycolate, methyl lactate, ethyl lactate, and butyl lactate.

An example of a method of manufacturing a compound of n=1 or more among compounds represented by the General Formula (32) will be described below.

Contents to be described below are an example of a manufacturing method, and the present invention is not limited to a compound obtained by the following manufacturing method.

For example, a compound can be obtained by a reaction between a carboxylic acid having halogen at an α-position, a salt thereof, or a derivative thereof and a carboxylic acid alkyl ester having halogen or a hydroxy group at an α-position. When this is represented by general formulas, the following is obtained.

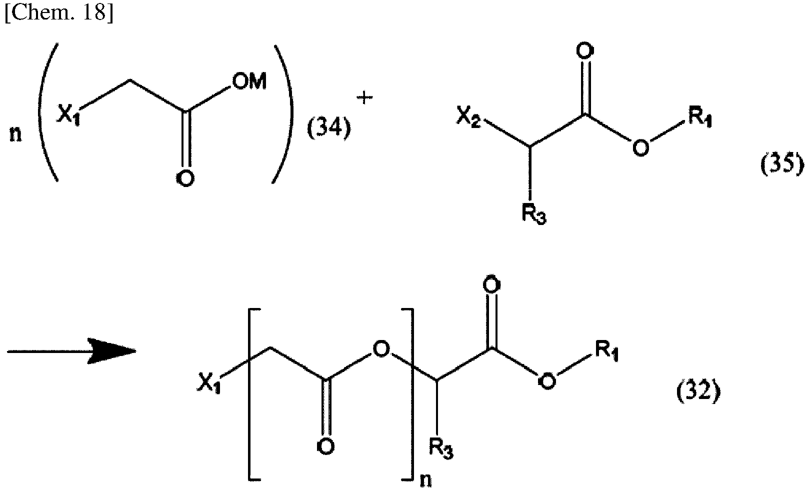

Examples of the carboxylic acid having halogen at an α-position, a salt thereof, or a derivative thereof include an alkali metal salt (potassium salt, sodium salt, or the like), an anhydride, an acid chloride, and the like of the carboxylic acid. As a specific compound represented by the General Formula (34), sodium chloroacetate or the like can be used.

Examples of the carboxylic acid alkyl ester having halogen or a hydroxy group at an α-position include an alkyl ester of an α-substituted carboxylic acid compound such as chloroacetic acid, bromoacetic acid, or lactic acid. An alkyl group of the alkyl ester is not particularly limited and may be an alkyl group having 1 to 50 carbon atoms.

Such an alkyl group may be any one of primary to tertiary alkyl groups, and specific examples thereof include a methyl group, an ethyl group, a benzyl group, an n-propyl group, an isopropyl group, an n-butyl group, an isobutyl group, a sec-butyl group, and a t-butyl group.

In the reaction, it is preferable that X₁ and X₂ are of different types. It is preferable to select a combination of functional groups so that X₁ remains unreacted on the assumption that X₁ and X₂ have different reactivities as different types of functional groups. Specifically, a combination of X₁ as a bromo group and X₂ as a chloro group is particularly preferable.

In addition, the value of n can be adjusted by adjusting a mixing ratio of two types of raw materials in the reaction. In the reaction, a mixture of a plurality of different types of compounds having different values of n is generally obtained. Regarding the compound represented by the General Formula (32), only a compound having a specific value of n by refining the compound may be used, or a mixture of a plurality of types of compounds having different values of n may be used.

The chemical structure represented by the General Formula (31) can be formed by reacting the compound represented by the General Formula (32) with various carboxylic acid compounds. Thus, when a carboxylic acid having an unsaturated group is used as the "compound having a carboxylic acid group", a compound having a functional group represented by the General Formula (31) and a polymerizable unsaturated group can be obtained.

Specifically, for example, when the compound represented by the General Formula (32) is reacted with (meth)acrylic acid, a compound represented by the following General Formula (36) is obtained. 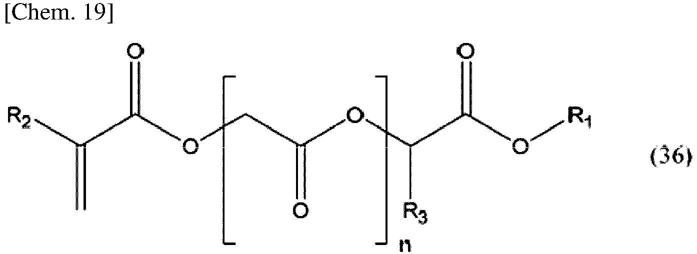 (In the formula, R₁ is an alkyl group having 50 or less carbon atoms.

R₂ is hydrogen or a methyl group.

R₃ is hydrogen or an alkyl group having 10 or less carbon atoms.

n is 1 to 20.)

R₁ in the compound represented by the General Formula (36) may be any one of primary, secondary, and tertiary alkyl groups as long as R₁ has 50 or less carbon atoms. However, R₁ is more preferably a primary or secondary alkyl group and most preferably a primary alkyl group.

### (1-2-b-Y)

The compound represented by the General Formula (7) may be a compound having a functional group represented by the following General Formula (41) and/or a functional group represented by the following General Formula (42), and an unsaturated group.

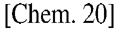

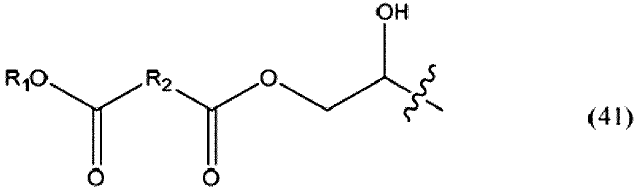

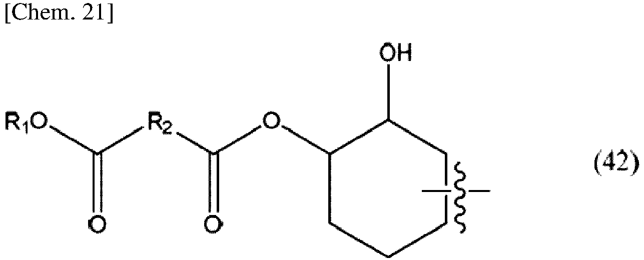

(In any one of the General Formula (41) and General Formula (42), R₁ is an alkyl group having 50 or less carbon atoms.

R₂ is an alkylene group having 50 or less carbon atoms that may contain an oxygen atom and a nitrogen atom as a portion thereof.)

That is, in the compound represented by the General Formula (4), a COOR₁₂ group may have the structure represented by the General Formula (41) and/or the structure represented by the General Formula (42).

An R₂ group in the General Formula (41) is an alkylene group having 50 or less carbon atoms that may contain an oxygen atom and a nitrogen atom as a portion thereof, and specifically, examples thereof include a methylene group, an ethylene group, an n-propylene group, an i-propylene group, an n-butylene group, or a cyclic structure such as a benzene ring or a cyclohexyl ring (carbon chains 1 to 50). Among them, an ethylene group is particularly preferable because the ethylene group is made from an inexpensive raw material and has excellent reactivity.

Examples of a compound having the structure represented by the General Formula (41) include a compound represented by the following General Formula (43).

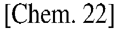

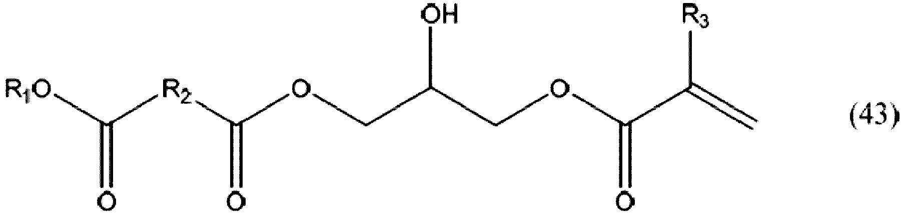

(In the formula, R₁ is an alkyl group having 50 or less carbon atoms.

R₂ is an alkylene group having 50 or less carbon atoms that may contain an oxygen atom and a nitrogen atom as a portion thereof.

R₃ is hydrogen or a methyl group.)

Among ester compounds represented by the General Formula (43), an ester compound represented by the following General Formula (45) is more preferable.

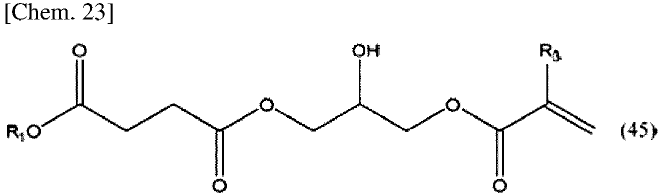

A method of manufacturing an ester compound having the functional group represented by the General Formula (41) is not particularly limited, and examples of the method include a method of reacting an epoxy compound with a compound having an alkyl ester group and a carboxyl group. When this is represented by a general formula, the following reaction is shown.

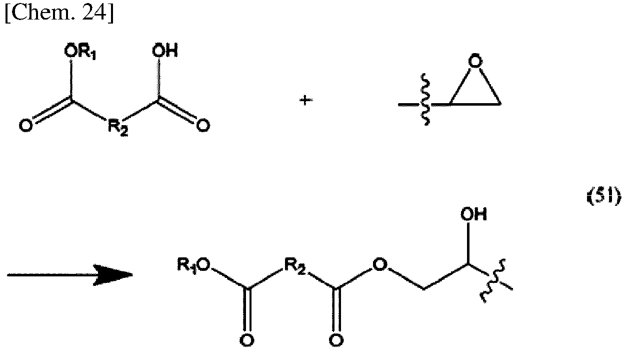

In the reaction, a compound having an alkyl ester group and a carboxyl group to be used can be manufactured by a reaction between an anhydride and an alcohol, as in the following reaction.

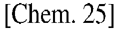

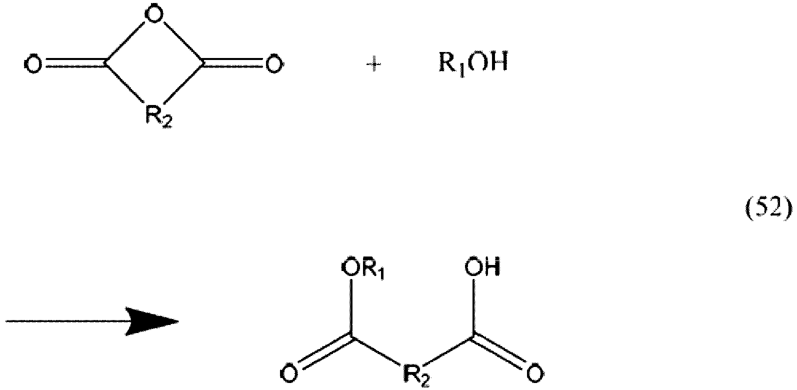

The anhydride which is a raw material in the reaction represented by the General Formula (52) is not particularly limited, and various dibasic anhydrides such as succinic anhydride, maleic anhydride, phthalic anhydride, hexahydrophthalic anhydride, methylhexahydrophthalic anhydride, benzoic anhydride, and itaconic anhydride having a cyclic structure can be used. The reaction represented by the General Formula (52) is a well-known general reaction and can be performed under general reaction conditions and the like.

The compound having an alkyl ester group and a carboxyl group which is used in a synthesis method represented by the General Formula (51) is not limited to a compound obtained by a method of the General Formula (52), and compounds obtained by other methods may also be used.

In the synthesis method represented by the General Formula (51), an epoxy compound is used as an essential component. The epoxy compound is not particularly limited as long as it has an unsaturated double bond and an epoxy group, and any epoxy compound can be used.

Any known epoxy compound can be used as an epoxy compound that can be used in the reaction, and examples thereof include glycidyl methacrylate, 4-hydroxybutyl acrylate glycidyl ether, and trimethylolpropane triglycidyl ether.

For example, when epichlorohydrin is used, an epoxy group can be introduced into a compound having various skeletons by reacting epichlorohydrin with a phenol compound, a carboxylic acid compound, a hydroxy group-containing compound, or the like. A compound having the functional group represented by the General Formula (41) can be obtained by performing the reaction on any epoxy compound. A general formula of such a reaction is shown below.

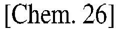

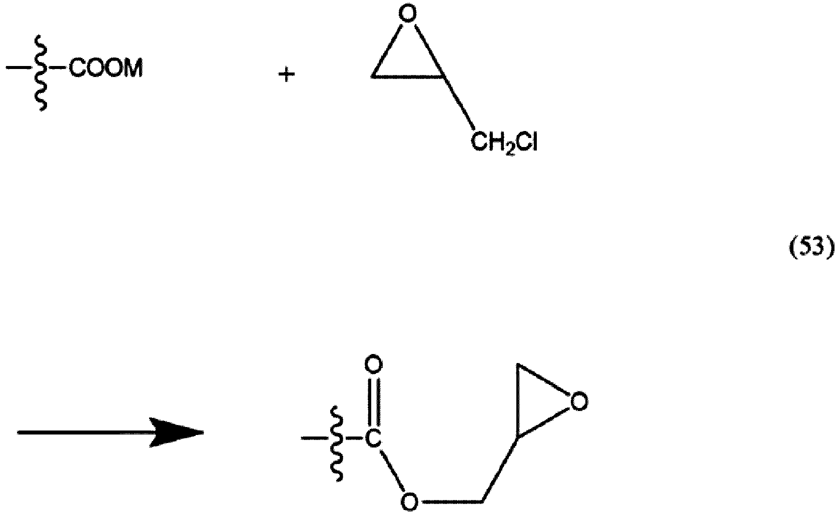

Examples of the hydroxycarboxylic acid having the carboxyl group and unsaturated group include (meth)acrylic acid.

Further, the epoxy compound may be a cyclic epoxy compound.

That is, in a case where a cyclic epoxy compound is used as an epoxy compound, a compound having a structure represented by the General Formula (52) can be obtained by the following reaction.

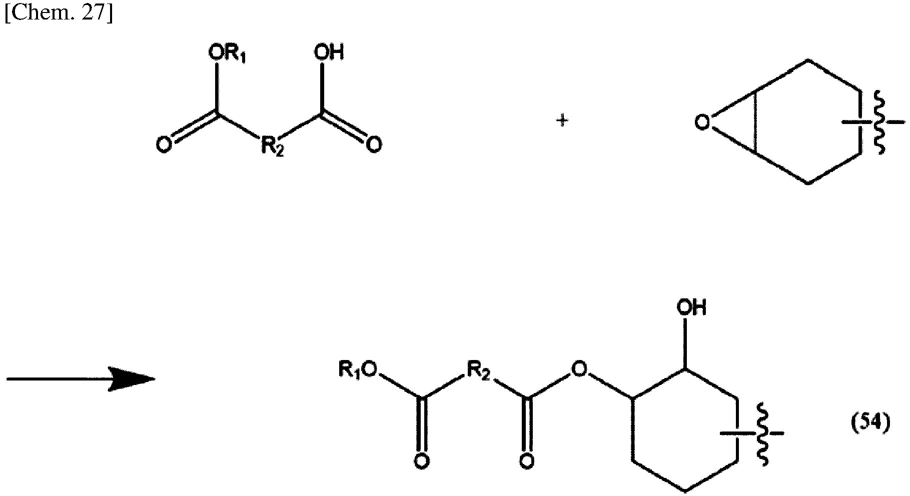

Examples of an alicyclic epoxy compound that can be used for the general formula include 3,4-epoxycyclohexylmethyl methacrylate and 3',4'-epoxycyclohexylmethyl 3,4-epoxycyclohexanecarboxylate.

Specific examples of the compound having the functional group represented by the following General Formula (41) and/or the compound represented by the following General Formula (42), and an unsaturated group include a compound represented by the following general formula.

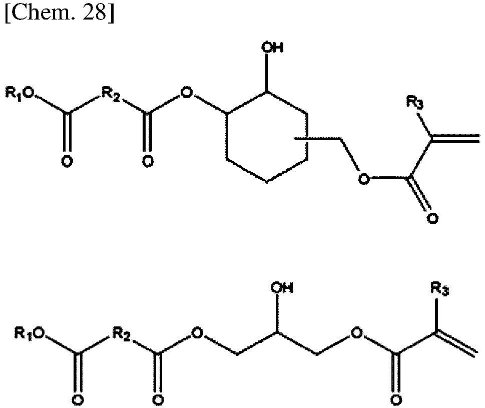

Examples of specific chemical structures of compounds represented by the General Formula (4) that can be synthesized by the methods exemplified above are shown below. It is to be noted that the present invention is not limited to the compounds exemplified below.

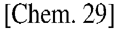

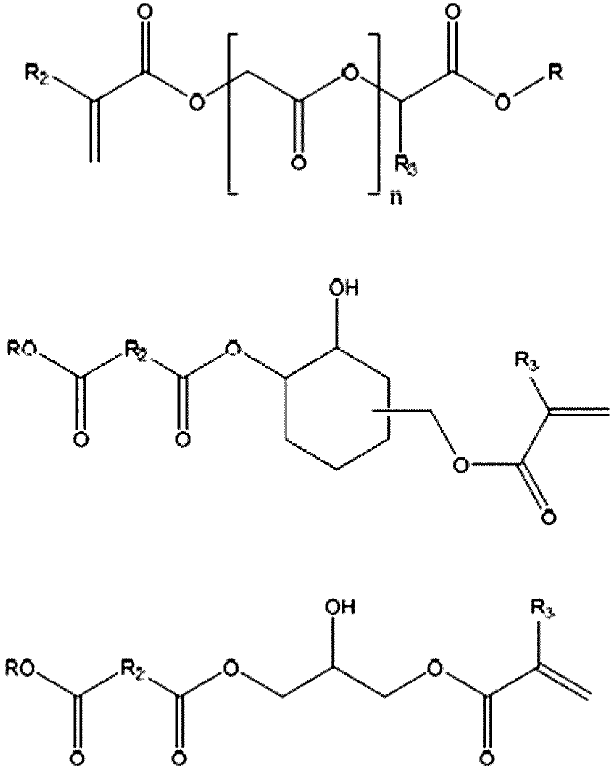

### (In the general formulas, R is an alkyl group having 50 or less carbon atoms.)

Also in the compounds represented by the general formulas, R in the general formulas is an alkyl group having 50 or less carbon atoms, and the number of carbon atoms is preferably within the range of 1 to 20, more preferably within the range of 1 to 10, still more preferably within the range of 1 to 6, and most preferably within the range of 1 to 4. Such a range is preferable in that the curing reaction can proceed suitably. In addition, R is most preferably a primary or secondary alkyl group.

### (1-3) Other monomers

A polymer used in the present invention can also be a homopolymer or a copolymer composed of only the monomers shown in (1-1) and (1-2) described above, or can also be a copolymer using other monomers.

Other monomers that can be used in the polymer are not particularly limited, and any monomer having a polymerizable unsaturated group can be used. Monomers that can be used are shown below.

Various α-olefins such as ethylene, propylene or butane-1;
various halogenated olefins except fluoroolefin such as vinyl chloride or vinylidene chloride;
various aromatic vinyl compounds such as styrene, α-methylstyrene or vinyltoluene; various amino group-containing amide-based unsaturated monomers such as N-dimethylaminoethyl(meth)acrylamide, N-diethylaminoethyl(meth)acrylamide, N-dimethylaminopropyl(meth)acrylamide or N-diethylaminopropyl(meth)acrylamide;
various dialkylaminoalkyl(meth)acrylates such as dimethylaminoethyl(meth)acrylate or diethylaminoethyl(meth)acrylate; various amino group-containing monomers such as tert-butylaminoethyl(meth)acrylate, tert-butylaminopropyl(meth)acrylate, aziridinyl ethyl(meth)acrylate, pyrrolidinylethyl(meth)acrylate or piperidinylethyl(meth)acrylate;
various carboxyl group-containing monomers such as (meth)acrylic acid, crotonic acid, itaconic acid, maleic acid, fumaric acid or methacryloyloxyethyl succinate; various epoxy group-containing monomers such as glycidyl(meth)acrylate, β-methylglycidyl(meth)acrylate or (meth)allyl glycidyl ether; mono- or diesters of various α, β-unsaturated dicarboxylic acids such as maleic acid, fumaric acid or itaconic acid with monohydric alcohols having 1 to 18 carbon atoms;
various hydrolyzable silyl group-containing monomers such as vinyltrimethoxysilane, vinyltriethoxysilane, vinyltripropoxysilane, vinylmethyldiethoxysilane, vinyltris (β-methoxyethoxy) silane, allyltrimethoxysilane, trimethoxysilylethyl vinyl ether, triethoxysilylethyl vinyl ether, methyldimethoxysilyl ethyl vinyl ether, trimethoxysilylpropyl vinyl ether, triethoxysilylpropyl vinyl ether, methyldiethoxysilylpropyl vinyl ether, γ-(meth)acryloyloxypropyltrimethoxysilane, γ-(meth)acryloyloxypropyltriethoxysilane or γ-(meth)acryloyloxypropylmethyldimethoxysilane;
various fluorine-containing α-olefins such as vinyl fluoride, vinylidene fluoride, trifluoroethylene, tetrafluoroethylene, chlorotrifluoroethylene, bromotrifluoroethylene, pentafluoropropylene or hexafluoropropylene; various fluorine atom-containing monomers such as various perfluoroalkyl perfluorovinyl ether or (per) fluoroalkyl vinyl ether (provided that the alkyl group has 1 to 18 carbon atoms) including trifluoro methyl trifluorovinyl ether, pentafluoroethyl trifluorovinyl ether or heptafluoropropyl trifluorovinyl ether;
various alkyl vinyl ethers or substituted alkyl vinyl ethers such as methyl vinyl ether, ethyl vinyl ether, n-propyl vinyl ether, isopropyl vinyl ether, n-butyl vinyl ether, isobutyl vinyl ether, tert-butyl vinyl ether, n-pentyl vinyl ether, n-hexyl vinyl ether, n-octyl vinyl ether, 2-ethylhexyl vinyl ether, chloromethyl vinyl ether, chloroethyl vinyl ether, benzyl vinyl ether or phenylethyl vinyl ether;
various cycloalkyl vinyl ethers such as cyclopentyl vinyl ether, cyclohexyl vinyl ether or methyl cyclohexyl vinyl ether; various aliphatic carboxylic acid vinyls such as vinyl 2,2-dimethyl propanoate, vinyl 2,2-dimethyl butanoate, vinyl 2,2-dimethyl pentanoate, vinyl 2,2-dimethyl hexanoate, vinyl 2-ethyl-2-methyl butanoate, vinyl 2-ethyl-2-methyl pentanoate, vinyl 3-chloro-2,2-dimethyl propanoate and the like, as well as vinyl acetate, vinyl propionate, vinyl butyrate, vinyl isobutyrate, vinyl caproate, vinyl caprylate, vinyl caprate or vinyl laurate, C₉ branched aliphatic carboxylic acid vinyl, C₁₀ branched aliphatic carboxylic acid vinyl, C₁₁ branched aliphatic carboxylic acid vinyl or vinyl stearate; vinyl esters of carboxylic acids having a cyclic structure such as vinyl cyclohexane carboxylate, vinyl methyl cyclohexane carboxylate, vinyl benzoate or vinyl p-tert-butylbenzoate.

In the present invention, the various monomers of (1-1) to (1-3) can be combined and polymerized as necessary to obtain a compound having both an alkyl ester group and a hydroxy group, a compound having an alkyl ester group, and a compound having a hydroxy group. Further, the functional groups required for water solubilization can also be introduced into a resin in combination in a required proportion depending on the purpose.

The method for manufacturing the polymer is not particularly limited, and the polymer can be manufactured by polymerization using a known method. More specifically, polymerization methods such as a solution polymerization method in an organic solvent, an emulsion polymerization method in water, a miniemulsion polymerization method in water, an aqueous solution polymerization method, a suspension polymerization method, a UV curing method can be mentioned.

Further, in a case where solution polymerization has been performed in an organic solvent, and then aqueousness is achieved by performing a known operation, whereby a form that can be used for the curable resin composition according to the present invention may be obtained.

When a polymer having a structural unit derived from a carboxyl group-containing monomer is used, the polymer can be neutralized to obtain a polymer soluble in water. Therefore, it is preferably used in a step of forming an image layer in a printed wiring board, an optical film for a display, various batteries, and the like, since after a part of a resin is irradiated with energy rays in a masked state, the uncured part of the resin can be removed by being washed with water.

In such a treatment, a polymer including, at a ratio of 4 mol% to 35 mol%, a structural unit derived from a carboxyl group-containing monomer can be used. Further, the resin may be used in a state of being neutralized with a basic compound, or the resin may be cured, immersed in an aqueous solution of the basic compound, and then washed with pure water. The basic compound is not particularly limited, and examples thereof include tetraethylammonium hydroxide, tetrapropylammonium hydroxide, tetrabutylammonium hydroxide, benzyltrimethylammonium hydroxide, dimethylethanolamine, ethylamine, diethylamine, aqueous ammonia, choline, pyrrole, piperidine, 1,8-diazabicyclo-[5,4,0]-7-undecene, sodium hydroxide, potassium hydroxide, sodium carbonate, sodium hydrogen carbonate, sodium silicate, and sodium metasilicate. The concentration of the basic compound when the resin is immersed in the aqueous solution of the basic compound is 0.001% by mass to 10% by mass, and preferably 0.01% by mass to 1% by mass. An appropriate amount of a water-soluble organic solvent such as methanol and ethanol, a surfactant, and the like can be added to the basic aqueous solution and can be used in combination.

It is more preferable to use a compound represented by the following general formula as the monomer having an acid group.

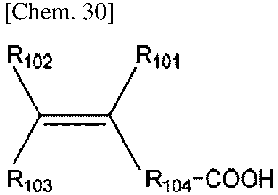

(In the formula, R₁₀₁, R₁₀₂, and R₁₀₃ are the same as or different from each other and each is hydrogen, an alkyl group, a carboxyl group, an alkyl ester group or a structure represented by the following R₁₀₄-COOH.

R₁₀₄ is an aliphatic, alicyclic or aromatic alkylene group having 50 or less atoms in the main chain, which may have one or two or more functional groups selected from the group consisting of an ester group, an ether group, an amide group, and a urethane in the main chain, and may have a side chain.)

Use of the compound is particularly preferable in that there is no adverse effect on a transesterification reaction due to the presence of an acid group, and a curable resin composition having satisfactory curability can be obtained.

It is still more preferable that the compound is a derivative of (meth)acrylic acid represented by the following.

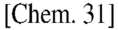

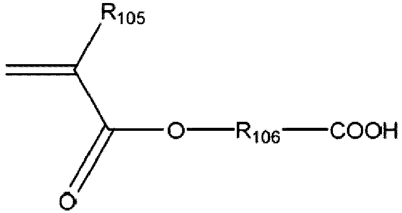

(In the formula, R₁₀₅ is H or a methyl group.

R₁₀₆ is an alkylene group having 48 or less atoms in the main chain, which may have an ester group, an ether group and/or an amide group in the main chain, and may have a side chain.)

Specific examples of such a compound include 2-methacryloyloxyethyl succinic acid and 2-acryloyloxybutyl succinic acid.

It is preferable that such an acid group in the polymer is introduced such that a resin acid value is in the range of 5 to 200. A lower limit of the acid value is preferably 10 and more preferably 15. An upper limit of the acid value is preferably 120 and more preferably 80. In a case where the acid value is low, it may be difficult to perform dissolution in water even after neutralization. In a case where the acid value is excessively high, viscosity becomes high, which may result in a problem in handleability or the like.

Examples of the amine compound include tertiary amines such as triethylamine, tributylamine, dimethylethanolamine, and triethanolamine; secondary amines such as diethylamine, dibutylamine, diethanolamine, and morpholine; primary amines such as propylamine, ethanolamine, and dimethylethanolamine; and quaternary ammonium such as ammonia.

The amine compound is not particularly limited, and tertiary amines are preferable. Ammonia is not preferable in terms of yellowing after baking, and primary and secondary amines are not preferable in that reactions with the carboxylic acid occur in parallel.

When the amine compound is used, it is preferable that the amount thereof used is usually within the range of 0.1 mol to 1.5 mol equivalent to a carboxyl group in the unsaturated carboxylic acid or anhydride-modified polyolefin.

In the case of making a resin aqueous by the method, a resin can be obtained by a method such as normal solution polymerization and then added with water and an amine compound, and the mixture is stirred.

In addition, a hydroxy group and/or an alkyl ester group may be introduced into a side chain by reacting a side chain functional group of the polymer obtained by polymerizing a composition containing the monomer. The reaction at the side chain is not particularly limited, and examples thereof include transesterification, a reaction with isocyanate, a reaction with epoxy, an addition reaction, hydrolysis, dehydration condensation, and a substitution reaction.

A molecular weight of the polymer is not particularly limited, and for example, a weight average molecular weight can be 3,000 to 300,000. An upper limit of the weight average molecular weight is more preferably 100,000, still more preferably 50,000, and even more preferably 30,000. A lower limit of the weight average molecular weight is more preferably 4,000, and still more preferably 5,000.

### (2) Polyester polyol

A polyester polyol can usually be manufactured by an esterification reaction or a transesterification reaction of an acid component and an alcohol component.

As the acid component, a compound which is usually used as an acid component in the manufacturing of a polyester resin can be mentioned. Examples of the acid component include aliphatic polybasic acids, alicyclic polybasic acids, aromatic polybasic acids, and anhydrides and esterified products thereof.

In addition, the polyester resin may be a resin obtained by reacting α-olefin epoxide such as propylene oxide and butylene oxide, a monoepoxy compound such as Cardura E10 (trade name, glycidyl ester of synthetic highly branched saturated fatty acid, manufactured by Japan Epoxy Resin Co., Ltd.), or the like with an acid group of the polyester resin.

In addition, the polyester resin may be urethane-modified.

The polyester resin can have a weight average molecular weight within the range of 3,000 to 100,000, and preferably 5,000 to 30,000. The weight average molecular weight of the polyester resin can be measured by a method same as that of a weight average molecular weight of the acrylic resin.

Examples of the aliphatic polybasic acid, and anhydride and esterified product thereof generally include aliphatic compounds having two or more carboxyl groups in one molecule, an anhydride of the aliphatic compound and an esterified product of the aliphatic compound, for example, include aliphatic polycarboxylic acids such as succinic acid, glutaric acid, adipic acid, pimelic acid, suberic acid, azelaic acid, sebacic acid, undecane diacid, dodecanedioic acid, brassylic acid, octadecanedioic acid, citric acid, and butanetetracarboxylic acid; anhydrides of the above-mentioned aliphatic polycarboxylic acids; esterified products of lower alkyl having about 1 to about 4 carbon atoms of the above-mentioned aliphatic polycarboxylic acid, and the like; and any combinations thereof.

The aliphatic polybasic acid is preferably adipic acid and/or adipic anhydride from the viewpoint of the smoothness of the coating film to be obtained.

The alicyclic polybasic acids, and anhydrides and esterified products thereof are usually compounds having one or more alicyclic structures and two or more carboxyl groups in one molecule, anhydrides of the above-mentioned compounds and esterified products of the above-mentioned compounds. The alicyclic structure is mainly a 4-membered to 6-membered ring structure. Examples of the alicyclic polybasic acid and anhydride and esterified product thereof include alicyclic polycarboxylic acids such as 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid, and 1,3,5-cyclohexanetricarboxylic acid; anhydrides of the above-mentioned alicyclic polycarboxylic acids; esterified products of lower alkyl having about 1 to about 4 carbon atoms of the above-mentioned alicyclic polycarboxylic acid, and the like; and any combinations thereof.

From the viewpoint of the smoothness of the coating film to be obtained, as the alicyclic polybasic acid and anhydride and esterified product thereof, it is preferable to use 1,2-cyclohexanedicarboxylic acid, 1,2-cyclohexanedicarboxylic anhydride, 1,3-cyclohexanedicarboxylic acid, 1,4-cyclohexanedicarboxylic acid, 4-cyclohexene-1,2-dicarboxylic acid, and 4-cyclohexene-1,2-dicarboxylic anhydride, and it is more preferable to use 1,2-cyclohexanedicarboxylic acid and/or 1,2-cyclohexanedicarboxylic anhydride.

The aromatic polybasic acid and anhydride and esterified product thereof usually include an aromatic compound having two or more carboxyl groups in one molecule, an anhydride of the aromatic compound and an esterified product of the above-mentioned aromatic compound, for example, aromatic polycarboxylic acids such as phthalic acid, isophthalic acid, terephthalic acid, naphthalene dicarboxylic acid, 4,4'-biphenyl dicarboxylic acid, trimellitic acid, and pyromellitic acid; anhydrides of the above-mentioned aromatic polycarboxylic acid, esterified products of lower alkyl having about 1 to about 4 carbon atoms of the above-mentioned aromatic polycarboxylic acid, and the like; and any combinations thereof.

As the aromatic polybasic acid and anhydrides and esterified products thereof, phthalic acid, phthalic anhydride, isophthalic acid, trimellitic acid, and trimellitic anhydride are preferable.

Further, examples of the acid component include acid components other than the aliphatic polybasic acid, the alicyclic polybasic acid and the aromatic polybasic acid, for example, include fatty acids such as coconut oil fatty acid, cottonseed oil fatty acid, hemp seed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, and safflower oil fatty acid; monocarboxylic acids such as lauric acid, myristic acid, palmitic acid, stearic acid, oleic acid, linoleic acid, linolenic acid, benzoic acid, p-tert-butylbenzoic acid, cyclohexanoic acid, and 10-phenyloctadecanoic acid; hydroxycarboxylic acids such as lactic acid, 3-hydroxybutanoic acid, and 3-hydroxy-4-ethoxybenzoic acid; and the like; and any combinations thereof.

As the alcohol component, a polyhydric alcohol having two or more hydroxy groups in one molecule may be used. Examples of the polyhydric alcohol include dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 1,1,1 -trimethylolpropane, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydroxypivalic acid neopentyl glycol ester, hydrogenated bisphenol A, hydrogenated bisphenol F, and dimethylolpropionic acid; polylactone diols obtained by adding a lactone compound such as ε-caprolactone to the above-mentioned dihydric alcohols; ester diol compounds such as bis(hydroxyethyl) terephthalate; polyether diol compounds such as alkylene oxide adducts of bisphenol A, polyethylene glycol, polypropylene glycol, and polybutylene glycol; trihydric or higher alcohols such as glycerin, trimethylolethane, trimethylolpropane, diglycerin, triglycerin, 1,2,6-hexanetriol, pentaerythritol, dipentaerythritol, tris(2-hydroxyethyl) isocyanuric acid, sorbitol, and mannitol; polylactone polyol compounds obtained by adding a lactone compound such as ε-caprolactone to the above-mentioned trihydric or higher alcohols; and fatty acid esterified products of glycerin.

The alcohol component include an alcohol component other than the polyhydric alcohols, for example, monoalcohols such as methanol, ethanol, propyl alcohol, butyl alcohol, stearyl alcohol, and 2-phenoxyethanol; and alcohol compounds obtained by reacting, with an acid, a monoepoxy compound such as propylene oxide, butylene oxide, "Cardura E10" (trade name, glycidyl ester of synthetic highly branched saturated fatty acid, manufactured by HEXION Specialty Chemicals, Inc.).

The polyester polyol is not particularly limited, and can be manufactured by a usual method. For example, the acid component and the alcohol component are heated in a nitrogen stream at about 150°C to about 250°C for about 5 hours to about 10 hours to carry out an esterification reaction or a transesterification reaction of the acid component and the alcohol component, whereby the polyester polyol can be manufactured.

### (3) Compound obtained by addition reaction between vinyl group and compound having active methylene group

A compound having an active methylene group represented by the following General Formula (10) causes an addition reaction with a vinyl group.

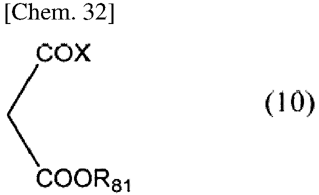

(In the formula, R₈₁ represents an alkyl group.

X represents an OR₈₁ group or a hydrocarbon group having 5 or less carbon atoms. When two R₈₁ are present in one molecule, these R₈₁ may be the same as or different from each other.)

Although the structure of the above-mentioned R₈₁ is not particularly limited, those having a known ester group such as a methyl ester group, an ethyl ester group, a benzyl ester group, an n-propyl ester group, an isopropyl ester group, an n-butyl ester group, an isobutyl ester group, and a sec-butyl ester group can be used.

Specific examples of such a compound having an active methylene group include malonic acid esters and acetoacetic acid esters. Compounds obtained by adding these compounds to a vinyl compound can be used.

The compound having an active methylene group can be added to a double bond by a Michael addition reaction. A general Michael addition reaction using such a compound having an active methylene group is represented by the following formula.

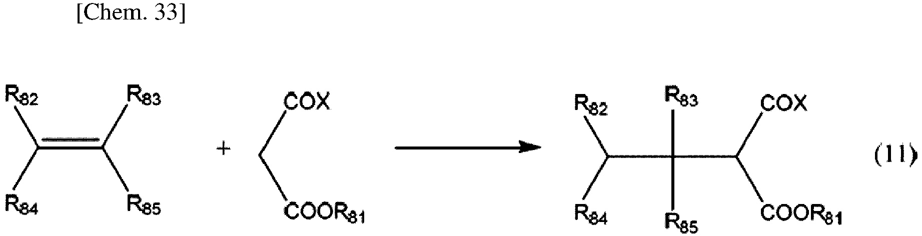

In the reaction, both two hydrogens of the active methylene group cause a Michael reaction, whereby a compound represented by the following General Formula (12) can be obtained.

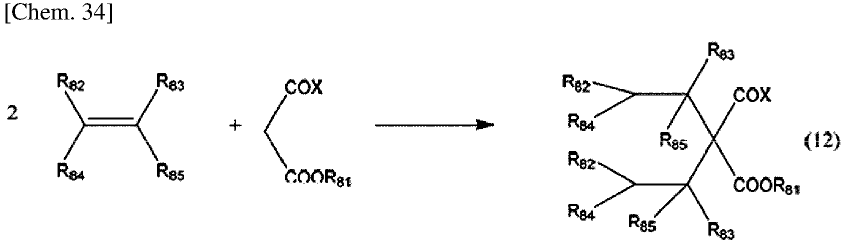

The compound obtained by such a reaction has a structure represented by the General Formula (11) and/or a structure represented by the General Formula (12). The compound has two or more alkyl ester groups, so it can be particularly suitably used for the purpose of the present invention.

In particular, when (meth)acrylic acid or a derivative thereof is used as the vinyl compound of the general formula, the following reaction occurs.

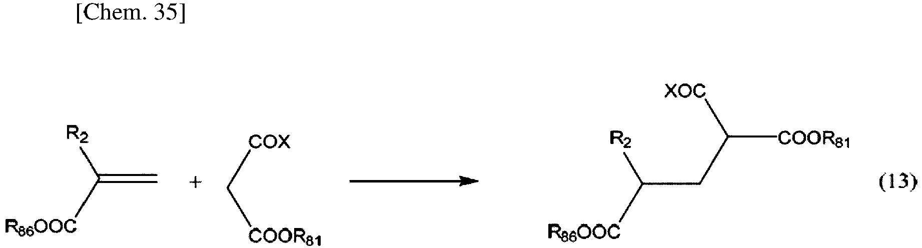

In the general formula, R₈₁ represents an alkyl group having 50 or less carbon atoms.

R₂ represents hydrogen or a methyl group.

R₈₆ is not particularly limited, and may be any functional group depending on the purpose.

In the reaction, both of the two hydrogens of the active methylene group cause a Michael reaction, whereby a compound represented by the following General Formula (9) can be obtained.

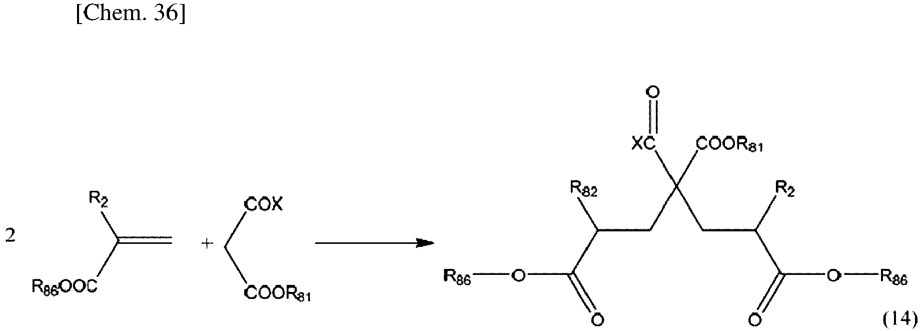

The compounds represented by the General Formulas (13) and (14) can be obtained by adjusting the molar ratio of the (meth)acrylic acid ester and the active methylene compound in the mixing of the raw materials. Further, by adjusting the molar ratio, a mixture of the compound represented by the General Formula (13) and the compound represented by the General Formula (14) can be obtained.

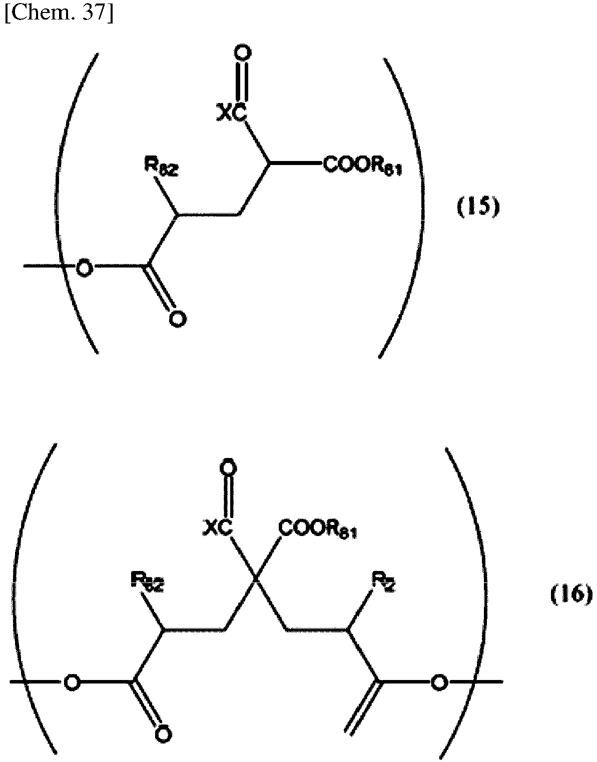

The ester compound obtained by such a reaction has structural units represented by the General Formulas (15), (16) in the molecule.

In the reaction, by using an acrylic acid derivative having two or more unsaturated bonds as a raw material, an ester compound having two or more of the structures represented by the General Formulas (15) and/or (16) in the molecule can be obtained.

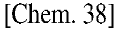

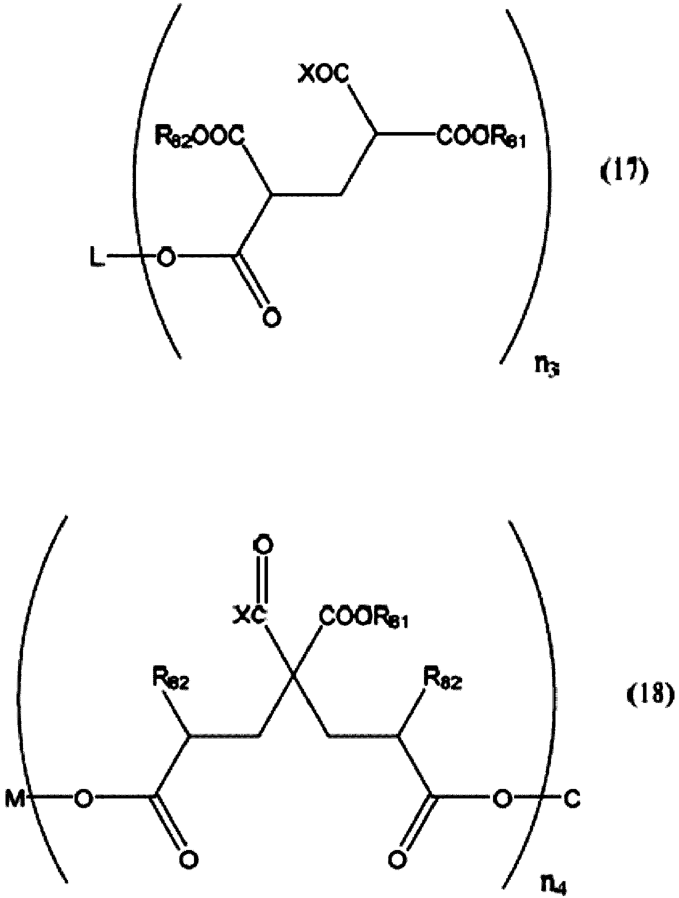

That is, a compound having the structures represented by the General Formulas (17) and (18) can be suitably used in the present invention. Such a compound is preferable because it has high transesterification reactivity and can obtain good curability because of many COOR groups in the molecule.

Most preferably, n₃ and n₄ in the general formulas are 2 to 12. L and M are not particularly limited as long as the compound has a molecular weight of 3,000 or less, and represent a hydrocarbon group which may have any functional group such as a hydroxy group, an ester group, and an ether group.

The "compound obtained by the addition reaction of the compound having an active methylene group with a vinyl group" may be one having two or more structures represented by the General Formula (17) and/or the General Formula (18) in one molecule, which is obtained by using a compound having two or more unsaturated bonds in one molecule as a raw material.

Many compounds having a structure derived from an ester of the compound having an active methylene group are known. The compound having the above-mentioned structure is particularly preferable in that the addition reaction of malonic acid ester or acetoacetic acid ester with a vinyl group can be easily promoted, and the compound can be easily synthesized, the number of the ester group can be adjusted by selecting the starting raw material, and thus the curing performance and the resin performance after curing can be easily adjusted.

Specifically, dimethyl malonate, diethyl malonate, di-n-butyl malonate, methyl acetoacetate, ethyl acetoacetate and the like can be suitably used.

Such a compound is obtained by performing a Michael addition reaction with the compound having an active methylene group using various (meth)acrylic acid derivatives having two or more unsaturated bonds as raw materials. The "(meth)acrylic acid derivative having one or more unsaturated bonds" is not particularly limited, and examples thereof include the following.

Examples of a (meth)acrylate having a functional group include methyl (meth)acrylate, ethyl (meth)acrylate, isopropyl (meth)acrylate, n-butyl (meth)acrylate, isobutyl (meth)acrylate, sec-butyl (meth)acrylate, and t-butyl (meth)acrylate.

Examples of a (meth)acrylate having two functional groups include 1,4-butanediol di(meth)acrylate, 1,3-butanediol di(meth)acrylate, 1,6-hexanediol di(meth)acrylate, ethylene glycol di(meth)acrylate, diethylene glycol di(meth)acrylate, triethylene glycol di(meth)acrylate, polyethylene glycol di(meth)acrylate, dipropylene glycol di(meth)acrylate, tripropylene glycol di(meth)acrylate, polypropylene glycol di(meth)acrylate, neopentyl glycol di(meth)acrylate, hydroxypivalic acid neopentylglycol di(meth)acrylate, 1,6-hexanediol di(meth)acrylate, 1,9-nonanediol di(meth)acrylate, 1,10-decanediol di(meth)acrylate, glycerin di(meth)acrylate, dimethylol-tricyclodecane di(meth)acrylate (DCP-A), EO adduct diacrylate of bisphenol A (Kyoeisha Chemical Co., Ltd.; Light Acrylate BP-4EA, BP-10EA), and PO adduct diacrylate of bisphenol A (Kyoeisha Chemical Co., Ltd.; BP-4PA, BP-10PA). Among them, PO adduct diacrylate of bisphenol A (Kyoeisha Chemical Co., Ltd.; BP-4PA), dimethylol-tricyclodecane di(meth)acrylate (DCP-A) and the like can be preferably used.

Examples of a (meth)acrylate having three functional groups include trimethylolmethane tri(meth)acrylate, trimethylolpropane tri(meth)acrylate, trimethylolpropane ethylene oxide-modified tri(meth)acrylate, trimethylolpropane propylene oxide-modified tri(meth)acrylate, pentaerythritol tri(meth)acrylate, glycerin propoxy tri(meth)acrylate, and tris(2-(meth)acryloyloxyethyl) isocyanurate. Among them, trimethylolpropane trimethacrylate, pentaerythritol trimethacrylate and the like can be preferably used.

Examples of a (meth)acrylate having four functional groups include dipentaerythritol tetra(meth)acrylate, pentaerythritol tetra(meth)acrylate, pentaerythritol ethylene oxide-modified tetra(meth)acrylate, pentaerythritol propylene oxide-modified tetra(meth)acrylate, and ditrimethylolpropane tetra(meth)acrylate. Among them, ditrimethylolpropane tetra(meth)acrylate, pentaerythritol tetra(meth)acrylate and the like can be preferably used.

Examples of a (meth)acrylate having four or more functional groups include polyfunctional (meth)acrylates such as pentaerythritol tetra(meth)acrylate, pentaerythritol ethylene oxide-modified tetra(meth)acrylate, ditrimethylolpropane tetra(meth)acrylate, dipentaerythritol tetra(meth)acrylate, dipentaerythritol penta(meth)acrylate, ditrimethylolpropane penta(meth)acrylate, propionic acid-modified dipentaerythritol penta(meth)acrylate, dipentaerythritol hexa(meth)acrylate, ditrimethylolpropane hexa(meth)acrylate, and hexa(meth)acrylate of caprolactone modified dipentaerythritol.

Specific examples of a compound corresponding to the above-mentioned compound are shown below.

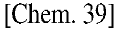

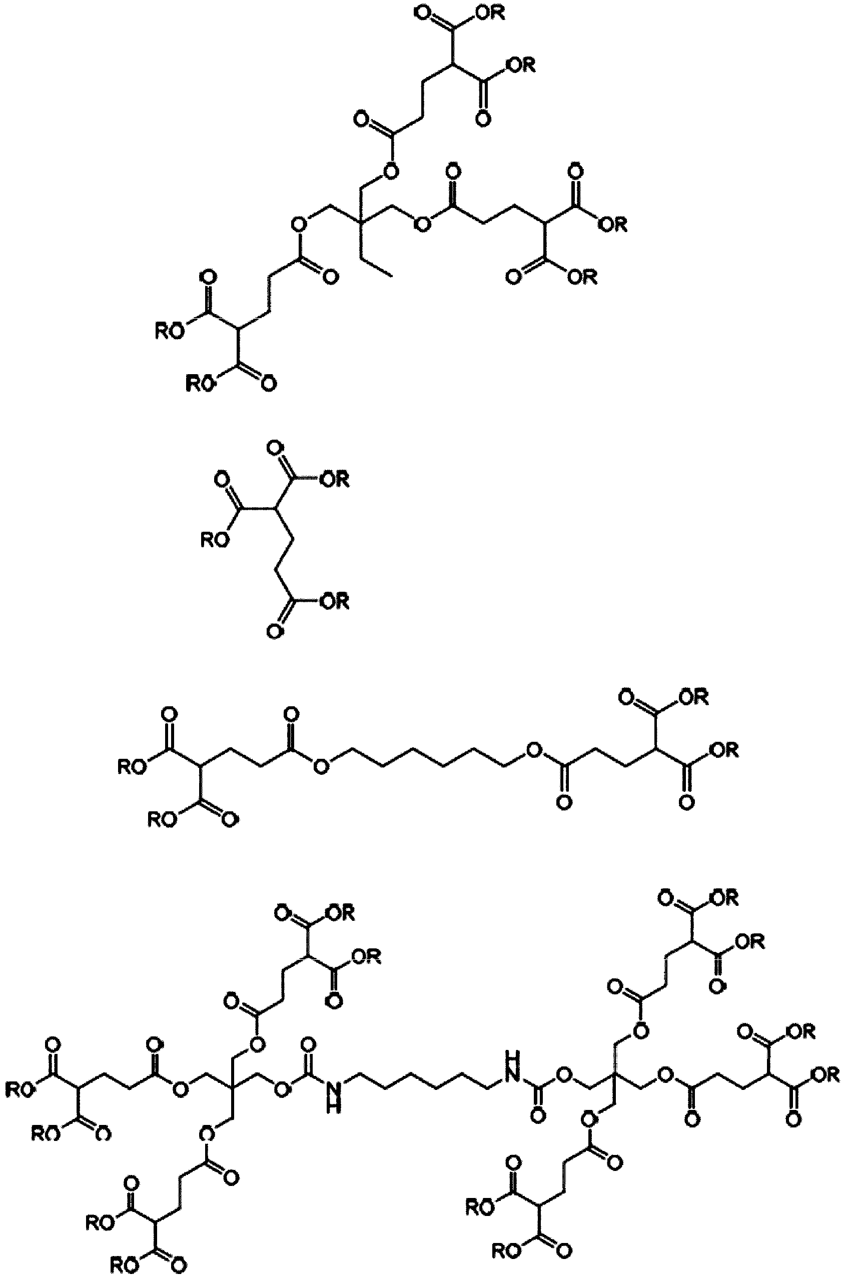

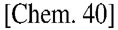

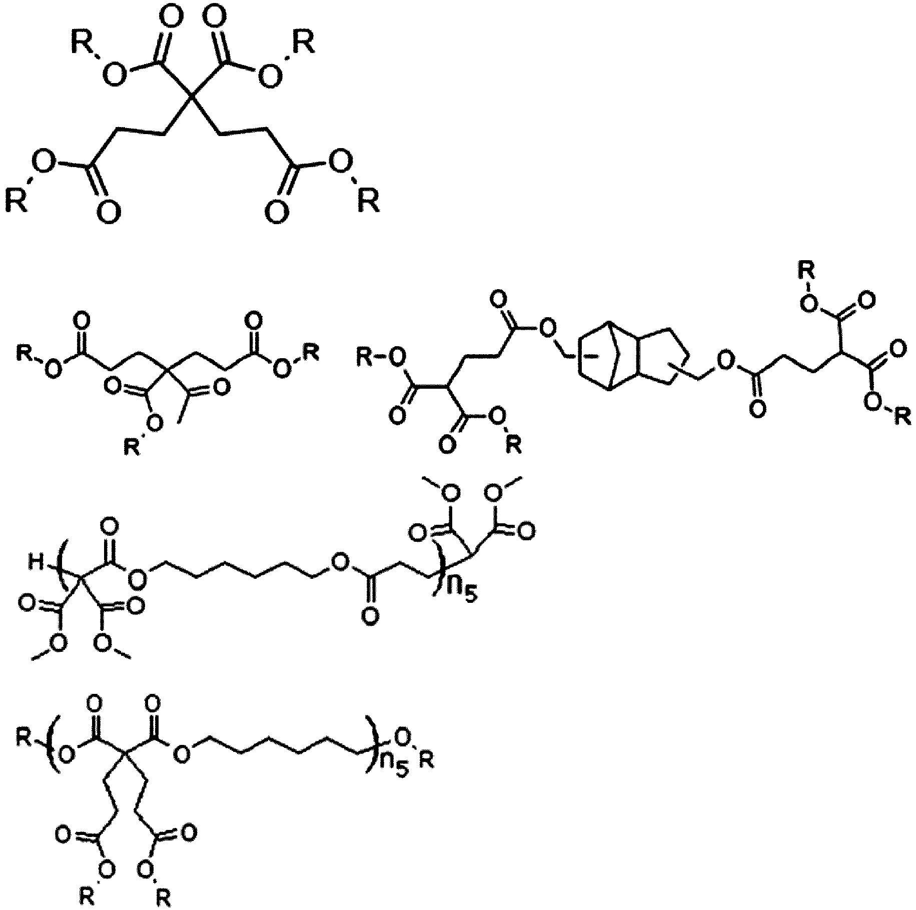

In the formulas, R represents the same alkyl group or different alkyl groups. n₅ represents 1 to 10.

It is preferable that the above-mentioned compounds each have 3 or more alkyl esters, which serve as cross-linking points, in the molecule. That is, since the larger the number of the alkyl ester group in the molecule, the higher the crosslink density of the resin after curing, it is preferable in that the hardness of a cured product is good and the cured product having excellent physical properties can be obtained.

It is more preferable that 5 or more alkyl ester groups are present in the molecule.

### (4) Compound obtained by reaction between compound having active methylene group and halogen-containing compound

A compound obtained in this manner can also be suitably used in the present invention. In particular, examples thereof include compounds in which carbonyl carbon of an ester group is directly halogenated. Halogen is not particularly limited, and examples thereof include chlorine, bromine, and iodine.

Examples of such a compound include compounds obtained by a reaction formula represented by the following General Formula (15).

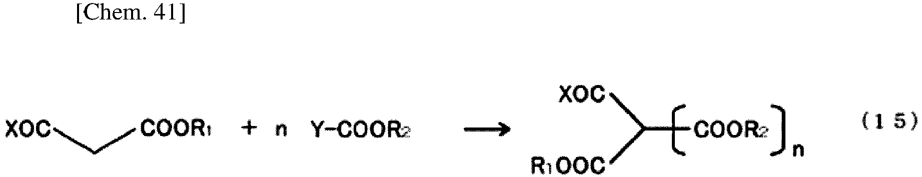

R₁ and R₂ are each a primary or secondary alkyl group having 50 or less carbon atoms (R₁ and R₂ may be the same), X is a hydrocarbon group having 5 or less carbon atoms or a -ORi group, Y is halogen, and n is 1 or 2.

A specific example of a compound corresponding to a compound obtained as a derivative of the compound having the active methylene group is shown below.

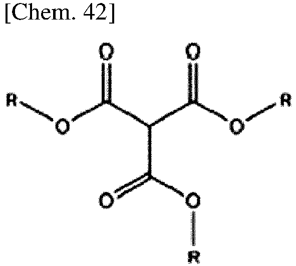

### (5) Compound containing two or more functional groups represented by General Formula (31)

A compound having two or more functional groups represented by the General Formula (31) can also be used in the present invention.

The functional group represented by the General Formula (31) has been described above in detail. Such a functional group is formed by reacting the compound represented by the General Formula (32) with a carboxylic acid. Thus, when various known polycarboxylic acids are reacted with the compound represented by the General Formula (32), a compound having two or more functional groups represented by the General Formula (31) can be obtained. Further, in the case of a reaction with a hydroxycarboxylic acid having a hydroxy group, a compound having a hydroxy group and the General Formula (32) is obtained, and this can also be used as a component of an aqueous curable resin composition on which a curing reaction through transesterification is performed.

In order to use the compound for the aqueous curable resin composition according to the present invention, the compound is preferably a compound having two or more functional groups, and examples thereof include a polycarboxylic acid having two or more carboxyl groups, and a hydroxycarboxylic acid having a carboxyl group and a hydroxy group.

Various polycarboxylic acids are general-purpose raw materials that are widely and inexpensively provided in many applications such as polyester raw materials, polyamide raw materials, neutralizers, and synthetic raw materials. A compound in which a such polycarboxylic acid is substituted with the functional group represented by the General Formula (32) by a known method can also be used in the present invention.

When such a compound is used as a compound having a functional group represented by the General Formula (32), the compound can be esterified at low cost by a known method, and a polyvalent ester group can be introduced with a relatively low molecular weight. In addition, esterification is preferable in that compatibility with an organic solvent is improved and thus the compound can be suitably used.

The polycarboxylic acid to be used herein is not particularly limited, and for example, a polycarboxylic acid having 50 or less carbon atoms can be used.

More specifically, examples thereof include a polyfunctional carboxylic acid exemplified as the raw materials of the above-mentioned "(4) alkyl ester of polyfunctional carboxylic acid".

It is preferable that a compound in which a carboxylic acid group of the polycarboxylic acid is substituted with the structure represented by the General Formula (31) has a molecular weight of 10,000 or less. Such a compound is preferable in that molecules move easily and curing proceeds. The molecular weight can be made a lower molecular weight such as 6,000 or less, 4,000 or less, and 2,000 or less.

As an example of such a compound, a general structure of a compound when the reaction has been performed using citric acid as the polycarboxylic acid is shown below.

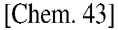

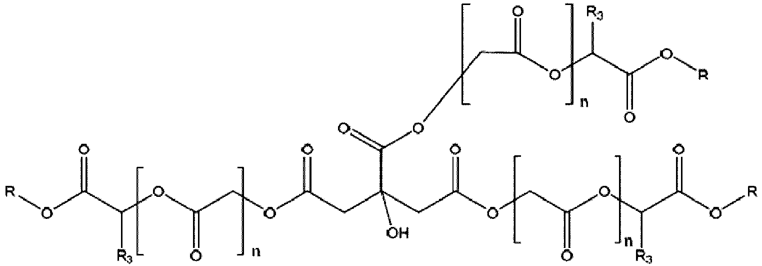

In the formula, R represents an alkyl group having 50 or less carbon atoms.

### (6) Compound having two or more functional groups represented by General Formula (41) and/or functional groups represented by General Formula (42)

A compound having the functional group represented by the General Formula (41) and/or the functional group represented by the General Formula (42) can be obtained by the manufacturing method.

A compound having two or more of such functional groups and a compound having such a functional group and a hydroxy group can be suitably used as components of a resin composition of which a transesterification reaction is a curing reaction.

The compound having the functional group represented by the General Formula (41) and/or the functional group represented by the General Formula (42) is used as a curable functional group in the curable resin composition. Thus, it is preferable that the compound has two or more functional groups. More specifically, the compound may be a compound having two or more functional groups represented by the General Formula (41) and/or functional groups represented by the General Formula (42), or may be a compound having a hydroxy group and the like, in addition to the functional group represented by the General Formula (41) and/or the functional group represented by the General Formula (42).

As described above, the functional group represented by the General Formula (41) and/or the functional group represented by the General Formula (42) can be introduced by performing the reaction represented by the General Formula (51) or the reaction represented by the General Formula (54) on various epoxy compounds.

Thus, a compound obtained by performing the reaction represented by the General Formula (54) on a known epoxy compound can also be used in the present invention.

An epoxy compound that can be used in such a reaction is not particularly limited, and examples thereof include an aliphatic polyfunctional liquid epoxy resin, a bisphenol A type epoxy resin, a bisphenol F type epoxy resin, a biphenyl type epoxy resin, a phenol novolac type epoxy resin, a cresol novolac type epoxy resin, a bisphenol derivative epoxy resin, and a naphthalene skeleton or alicyclic skeleton-containing novolac-based epoxy resin, and include an epoxy resin whose oxylan ring is glycidyl ether.

It is preferable that the epoxy compounds are each a compound having two or more epoxy groups in one molecule.

Further, the epoxy compound can be obtained by performing the reaction represented by the General Formula (53) on the carboxylic acid or derivatives thereof as described above.

Then, a compound having the functional group represented by the General Formula (41) and/or the functional group represented by the General Formula (42) can be obtained by performing the reaction represented by the General Formula (51) on the epoxy compound.

Thus, it is possible to obtain a compound having such two or more functional groups or a compound having such a functional group and a hydroxy group by performing the reaction on various polycarboxylic acids or hydroxycarboxylic acids.

The polycarboxylic acid that can be used as a raw material at the time of obtaining the compound having the functional group represented by the General Formula (41) and/or the functional group represented by the General Formula (42) by the reaction is not particularly limited, and for example, a polycarboxylic acid having 50 or less carbon atoms can be used.

More specifically, examples thereof include a polyfunctional carboxylic acid exemplified as the raw materials of the above-mentioned "(4) alkyl ester of polyfunctional carboxylic acid".

Further, in the case of the structure represented by the General Formula (41), in order to obtain a compound having both a hydroxy group and an alkyl ester group, fatty acids such as coconut oil fatty acid, cottonseed oil fatty acid, hemp seed oil fatty acid, rice bran oil fatty acid, fish oil fatty acid, Tall oil fatty acid, soybean oil fatty acid, linseed oil fatty acid, tung oil fatty acid, rapeseed oil fatty acid, castor oil fatty acid, dehydrated castor oil fatty acid, and safflower oil fatty acid; and monocarboxylic acids such as lauric acid, myristic acid, palmitic acid, stearic acid, oleic acid, linoleic acid, linolenic acid, benzoic acid, p-tert-butylbenzoic acid, cyclohexanoic acid, and 10-phenyloctadecanoic acid can also be used.

Examples of the hydroxycarboxylic acid having a carboxyl group and a hydroxy group that can be used as a raw material at the time of obtaining the compound having the functional group represented by the General Formula (41) and/or the functional group represented by the General Formula (42) by the reaction include hydroxycarboxylic acids such as glycolic acid, citric acid, lactic acid, 3-hydroxybutanoic acid, and 3-hydroxy-4-ethoxybenzoic acid.

Specific examples of such a compound include compounds having structures shown below.

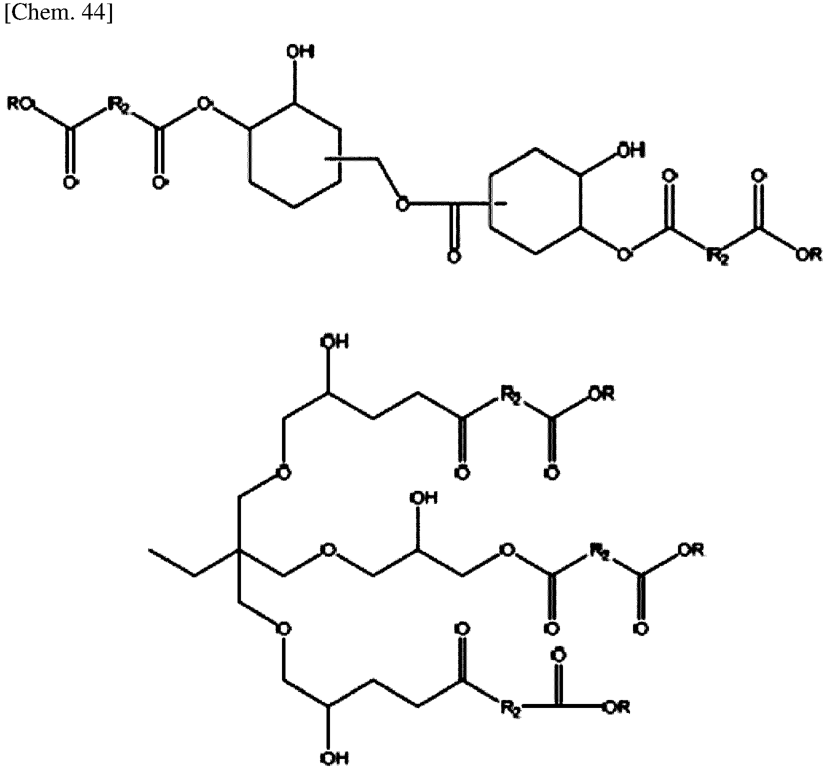

In the formulas, R represents an alkyl group having 50 or less carbon atoms.

### (7) Cyanuric acid-based ester compound

Examples of the ester compound having an alkyl ester group used in the present invention include cyanuric acid-based ester compounds exemplified below.

One of the cyanuric acid-based ester compounds is an ester compound having an isocyanuric acid ring represented by the following General Formula (61).

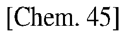

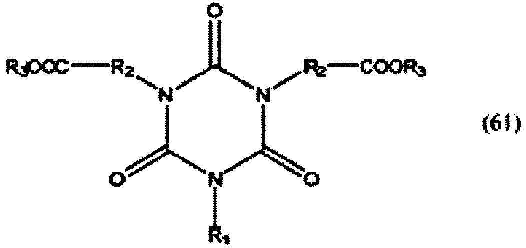

(In the formula, R₁ is hydrogen or a structure represented by R₂-COOR₃.

R₂ is a hydrocarbon group having 50 or less atoms in the main chain, which may have 1 or 2 or more functional groups selected from the group consisting of an ester group, an ether group, an amide group, and a urethane in the main chain, and may have a side chain.

R₃ is an alkyl group having 50 or less carbon atoms.)

The ester compound represented by the General Formula (61) has 2 or 3 alkyl ester groups, and can be particularly excellent in transesterification reactivity. Therefore, it is particularly preferable in that it is possible to obtain a resin composition having a curing start temperature of 130°C or lower and a gel fraction of 80% or more in a case of being cured under a condition of baking at 150°C for 30 minutes.

It is more preferable that in the monomer represented by the General Formula (61), R₃ has a primary or secondary alkyl ester group. A primary or secondary alkyl ester group derived from such a monomer easily causes a reaction with a hydroxy group, and thus it is possible to sufficiently achieve the object of the present invention.

The alkyl ester group is not particularly limited, and those having known alkyl groups such as a methyl ester group, an ethyl ester group, a benzyl ester group, an n-propyl ester group, an isopropyl ester group, an n-butyl ester group, an isobutyl ester group, and a sec-butyl ester group can be used. It is preferable that the alkyl group has 50 or less carbon atoms. Since the alkyl group is formed as an alcohol during the transesterification reaction and is preferably volatilized, the alkyl group is more preferably one having 20 or less carbon atoms, and still more preferably 10 or less. The boiling point of the alcohol volatilizing in the curing reaction is preferably 300°C or lower, and more preferably 200°C or lower.

A method of manufacturing the ester compound represented by the General Formula (61) is not particularly limited, and examples of the method include a method of reacting a halogenated carboxylic acid ester with cyanuric acid. When this is represented by a general formula, the following reaction is shown.

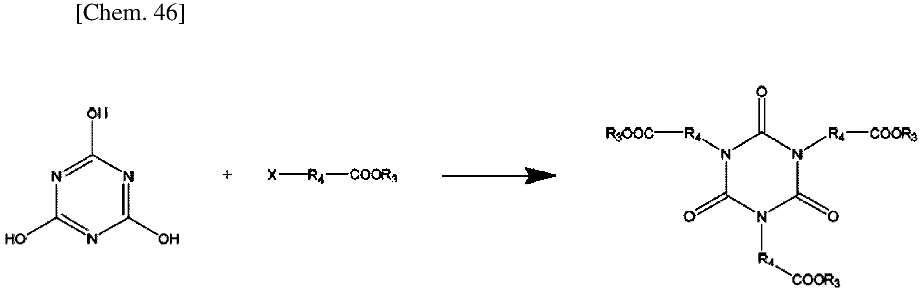

(In the formula, R₃ is an alkyl group having 50 or less carbon atoms.

R₄ is an alkylene group having 50 or less carbon atoms.

X represents a halogen element.)

Any known halogenated carboxylic acid ester can be used as the halogenated carboxylic acid ester used in the reaction, and examples thereof include methyl chloroacetate, ethyl chloroacetate, propyl chloroacetate, isopropyl chloroacetate, methyl 2-chloropropionate, ethyl 2-chloropropionate, propyl 2-chloropropionate, isopropyl 2-chloropropionate, methyl 2-chlorobutyrate, ethyl 2-chlorobutyrate, propyl 2-chlorobutyrate, isopropyl 2-chlorobutyrate, methyl bromoacetate, ethyl bromoacetate, propyl bromoacetate, isopropyl bromoacetate, methyl 2-bromopropionate, ethyl 2-bromopropionate, propyl 2-bromopropionate, isopropyl 2-bromopropionate, methyl 2-bromobutyrate, ethyl 2-bromobutyrate, propyl 2-bromobutyrate, isopropyl 2-bromobutyrate, ethyl iodoacetate, propyl iodoacetate, isopropyl iodoacetate, methyl 2-iodopropionate, ethyl 2-iodopropionate, propyl 2-iodopropionate, isopropyl 2-iodopropionate, methyl 2-iodobutanate, ethyl 2-iodobutanate, propyl 2-iodobutanate, and isopropyl 2-iodobutanate.

The reaction is a well-known general reaction and can be performed under general reaction conditions and the like.

In addition, examples of another method of manufacturing the ester compound represented by the General Formula (61) include a method of reacting an orthoformic ester with a carboxylic acid having an isocyanuric acid ring. When this is represented by a general formula, the following reaction is shown.

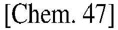

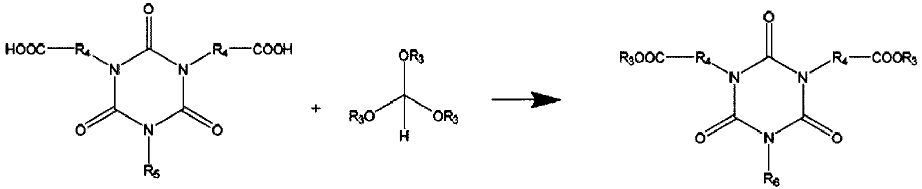

(In the formula, R₅ is hydrogen or a structure represented by R₄-COOH.

R₃ is an alkylene group having 50 or less carbon atoms.

R₆ is hydrogen or a structure represented by R₄-COOR₃.)

Examples of the carboxylic acid having an isocyanuric acid ring used in the reaction include tris(2-carboxyethyl) isocyanurate and bis(2-carboxyethyl) isocyanurate.

In addition, examples of the orthoformic ester used in the reaction include methyl orthoformate and ethyl orthoformate.

The reaction is a well-known general reaction and can be performed under general reaction conditions and the like.

Examples of a specific chemical structure of the ester compound having an isocyanuric acid ring represented by the General Formula (61) are shown below. It is to be noted that the present invention is not limited to the compounds exemplified below.

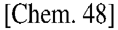

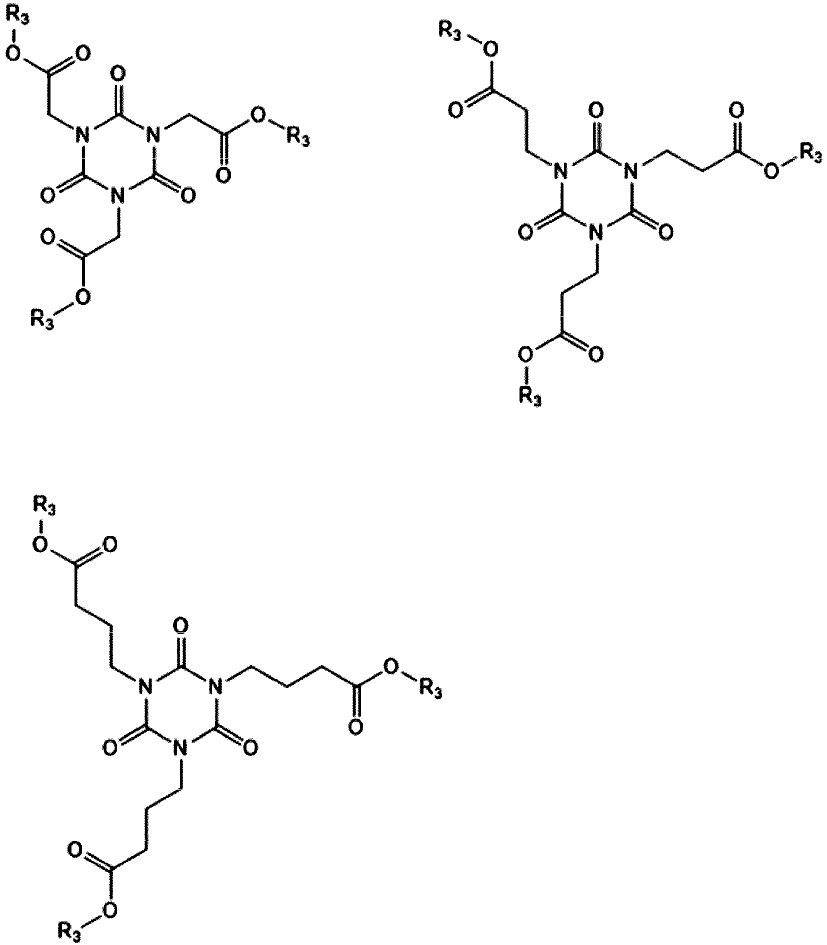

Examples of the cyanuric acid-based ester compound used in the present invention include cyanuric acid-based ester compounds exemplified below in addition to the above.

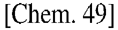

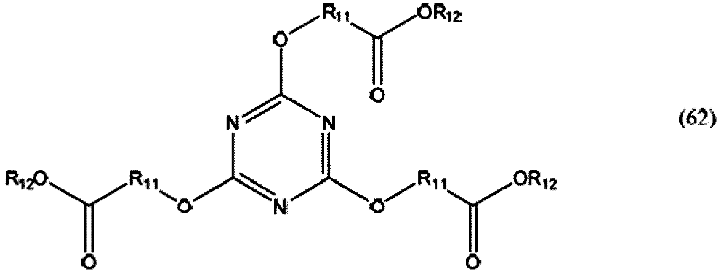

(In the formula, R₁₁ is an alkylene group having 50 or less carbon atoms.

R₁₂ is an alkyl group having 50 or less carbon atoms.)

The ester compound represented by the General Formula (62) can be particularly excellent in transesterification reactivity. Therefore, it is particularly preferable in that it is possible to obtain a resin composition having a curing start temperature of 130°C or lower and a gel fraction of 80% or more in a case of being cured under a condition of baking at 150°C for 30 minutes.

A method of manufacturing the ester compound represented by the General Formula (62) is not particularly limited, and examples of the method include a method of reacting a hydroxycarboxylic acid ester with cyanuric chloride. When this is represented by a general formula, the following reaction is shown.

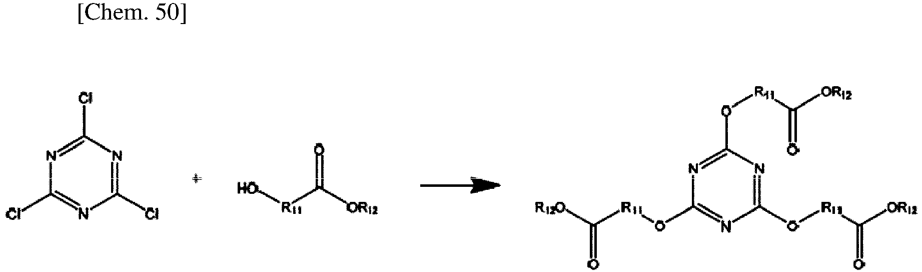

In addition, examples of the hydroxycarboxylic acid ester used in the reaction include methyl glycolate, ethyl glycolate, butyl glycolate, methyl hydroxypropionate, ethyl hydroxypropionate, butyl hydroxypropionate, methyl hydroxybutyrate, ethyl hydroxybutyrate, butyl hydroxybutyrate, methyl lactate, ethyl lactate, and butyl lactate.

There is an advantage that when various cyanuric acid-based compounds are used in the present invention, a coating film showing an excellent film physical property including a high crosslink density can be obtained even in a low temperature cure.

When used as the compound having an alkyl ester group, such compounds can be esterified inexpensively by a known method and a polyvalent ester group can be introduced with a relatively low molecular weight.

### (8) Alkyl ester of polyfunctional carboxylic acid

A compound obtained by a reaction between a polyfunctional carboxylic acid and an alcohol can also be used as the compound having an alkyl ester group of the present invention. Such a reaction can be represented by the following general formula.

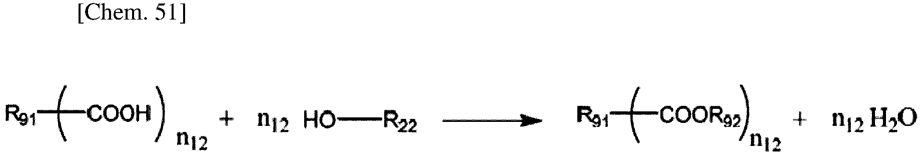

The compound having an alkyl ester group obtained by performing the same reaction on carboxylic acid derivatives can also be used for the object of the present invention.

Various polyfunctional carboxylic acids are general-purpose raw materials and widely and inexpensively provided in many applications such as polyester raw materials, polyamide raw materials, neutralizers, and synthetic raw materials. Compounds obtained by alkyl esterification of such polyfunctional carboxylic acids by a known method can also be used in the present invention.

When such a compound is used as the compound having an alkyl ester group, it can be esterified inexpensively by a known method and a polyvalent ester group can be introduced with a relatively low molecular weight. In addition, esterification is preferable in that compatibility with an organic solvent is improved and thus the compound can be suitably used.

The polyfunctional carboxylic acid to be used herein is not particularly limited, and for example, a polyfunctional carboxylic acid having 50 or less carbon atoms can be used.

More specifically, examples of the polyfunctional carboxylic acid include aliphatic polycarboxylic acids such as malonic acid, succinic acid, glutaric acid, adipic acid, pimelic acid, suberic acid, azelaic acid, sebacic acid, undecane diacid, dodecanedioic acid, brassylic acid, octadecanedioic acid, citric acid, and butanetetracarboxylic acid;
alicyclic polycarboxylic acids such as 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid, and 1,3,5-cyclohexanetricarboxylic acid;
aromatic polycarboxylic acids such as phthalic acid, isophthalic acid, terephthalic acid, naphthalene dicarboxylic acid, 4,4'-biphenyl dicarboxylic acid, trimellitic acid, and pyromellitic acid;
fatty acids such as coconut oil fatty acid, cottonseed oil fatty acid, hemp seed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, and safflower oil fatty acid; monocarboxylic acids such as lauric acid, myristic acid, palmitic acid, stearic acid, oleic acid, linoleic acid, linolenic acid, benzoic acid, p-tert-butylbenzoic acid, cyclohexanoic acid, and 10-phenyloctadecanoic acid; and hydroxycarboxylic acids such as lactic acid, 3-hydroxybutanoic acid, and 3-hydroxy-4-ethoxybenzoic acid.

In the present invention, an alkyl esterification method for the polyfunctional carboxylic acid is not particularly limited, and a known method such as dehydration condensation with alcohol can be applied. In addition, an alkyl esterification method for derivatives of the polyfunctional carboxylic acid can also be applied.

The alkyl ester of the polyfunctional carboxylic acid preferably has a molecular weight of 10,000 or less. Such a compound is preferable in that molecules move easily and curing proceeds. The molecular weight can be made a lower molecular weight such as 6,000 or less, 4,000 or less, and 2,000 or less.

### (8) Low molecular weight polyol

A low molecular weight polyol (specifically, a molecular weight of 2,000 or less) can also be used as the compound having at least two hydroxy groups in the molecule.

Examples of the low molecular weight polyol include dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 1,1,1 -trimethylolpropane, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydroxypivalic acid neopentyl glycol ester, hydrogenated bisphenol A, hydrogenated bisphenol F, and dimethylolpropionic acid; polylactone diols obtained by adding a lactone compound such as ε-caprolactone to the above-mentioned dihydric alcohols; ester diol compounds such as bis(hydroxyethyl) terephthalate; polyether diol compounds such as alkylene oxide adducts of bisphenol A, polyethylene glycol, polypropylene glycol, and polybutylene glycol; trihydric or higher alcohols such as glycerin, trimethylolethane, trimethylolpropane, diglycerin, triglycerin, 1,2,6-hexanetriol, pentaerythritol, dipentaerythritol, tris(2-hydroxyethyl) isocyanuric acid, sorbitol, and mannitol.

Such a low molecular weight polyol is known as a general-purpose product and can be obtained at low cost.

### (Regarding resin composition that can be cured at low temperature)

It is particularly preferable in that in the present invention, the resin composition is a low temperature curable resin composition having such as a thermosetting start temperature of 130°C. Among the various resin raw materials described above, in order to obtain such low-temperature curability, it is preferable to appropriately combine resin structures and catalyst compositions.

More specifically, for example, curing with heat can be performed at a lower temperature by using an ester compound having the structure represented by the General Formula (31). Further, it is preferable to use mono(meth)acrylate of a long-chain diol represented by 4-hydroxybutyl (meth)acrylate, 6-hydroxyhexyl (meth)acrylate, and cyclohexanedimethanol mono(meth)acrylate in combination with such a resin composition.

In addition, it is preferable to use a zinc catalyst such as zinc acetylacetonate or zinc octylate as the catalyst so as to obtain a low-temperature curing performance.

### (Initiator (B))

The curable resin composition according to the present invention essentially contains an initiator B for causing a curing reaction. The curable resin composition according to the present invention causes two types of reactions including a transesterification reaction and an unsaturated bond polymerization reaction. Therefore, it is preferable that the initiator (B) contains both a transesterification catalyst (B-1), which are initiators in the transesterification reaction and a photoreaction initiator (B-2).

### (Transesterification catalyst (B-1))

The curable resin composition according to the present invention contains a transesterification catalyst (B-1). That is, in order to efficiently cause a transesterification reaction between an ester group and a hydroxy group and obtain sufficient thermosetting property, the transesterification catalyst (B) is blended.

As the transesterification catalyst (B-1), any known compound that can activate a transesterification reaction can be used.

Specifically, examples thereof include various acidic compounds such as hydrochloric acid, sulfuric acid, nitric acid, acetic acid, phosphoric acid or sulfonic acid, and heteropolyacids; various basic compounds such as LiOH, KOH or NaOH, amines, and phosphines; various metal compounds such as PbO, magnesium oxide, zinc acetate, lead acetate, manganese acetate, copper acetate, nickel acetate, palladium acetate, aluminum isopropylate, zirconium acetylacetonate, iron chloride, cobalt chloride, palladium chloride, zinc dithiocarbamate, antimony trioxide, tetraisopropyl titanate, dibutyltin dilaurate, dibutyltin dioctate, or monobutyltin acid; quaternary ammonium salts such as tetramethylammonium chloride, dodecyltrimethylammonium bromide, triethylbenzylammonium chloride, tetramethylammonium hydroxide, and trimethylbenzylammonium methylcarbonate, phosphonium salts such as tetrabutylphosphonium bromide and tetrabutylphosphonium hydroxide. In addition, photoresponsive catalysts and thermal latent catalysts that generate acid by light or heat can also be used. Further, a zinc cluster catalyst (for example, ZnTAC24 (trade name) manufactured by Tokyo Chemical Industry Co., Ltd.) and the like can also be used.

Further, among the above-mentioned compounds, two or more types may be used in combination.

In the present invention, it is most preferable that a metal compound catalyst is used as a transesterification catalyst. The transesterification reactivity of the metal compound catalyst can be obtained by selecting a metal species, using the metal compound catalyst in combination with other compounds, or the like. Further, it is preferable that the metal compound catalyst is combined with a resin composition since required performance can be appropriately obtained.

It is preferable that the metal compound catalyst is a compound (B-1a) containing at least one metal element selected from the group consisting of zinc, tin, titanium, aluminum, zirconium, and iron. Such a compound is preferable because of having suitable transesterification reactivity. Among them, zinc and zirconium are preferable because of having particularly excellent transesterification reactivity.

Among the above-mentioned compounds, a zirconium compound is particularly preferable because of having extremely excellent transesterification ability, and by using the zirconium compound, a curable resin composition having the low-temperature curability can be easily obtained.

It is also preferable to use the zirconium compound as the transesterification catalyst since very high transesterification ability can be obtained even in a case where a compound (B-1b) described in detail below is not used in combination.

It is a novel invention to use a zirconium compound as a transesterification catalyst in a curable resin composition using a transesterification reaction as a curing reaction. Accordingly, a curable resin composition containing the resin component (A) having -COOR (R is an alkyl group having 50 or less carbon atoms) and a hydroxy group, and the zirconium compound as a transesterification catalyst is also one of the present inventions.

As the metal compound catalyst, a metal salt compound is particularly preferable, and examples thereof include various metal compounds such as zinc acetate, zinc acrylate, zinc acetylacetonate, zinc trifluoromethanesulfonate, aluminum isopropylate, iron chloride, zinc dithiocarbamate, tetraisopropyl titanate, dibutyltin dilaurate, dibutyltin dioctate, monobutyltin acid, zirconium butoxide, zirconium acetyl acetonate, and zirconia. Further, a zinc cluster catalyst (for example, ZnTAC24 (trade name) manufactured by Tokyo Chemical Industry Co., Ltd.) and the like can also be used.

Further, among the above-mentioned compounds, two or more types may be used in combination.

It is preferable that a metal acetylacetonate as an anion component is used as the metal compound since there is a tendency to obtain transesterification ability superior to that of a similar metal compound, and low-temperature curing performance can be realized. For example, zinc acetylacetonate and zirconium acetyl acetonate can be particularly suitably used. In particular, zirconium acetyl acetonate exhibits extremely excellent catalyst performance.

It is more preferable that the metal compound is used as a catalyst and at least one compound (B-1b) selected from the group consisting of an organophosphorus compound, urea, alkylated urea, a sulfoxide compound, pyridine, and pyridine derivatives is used in combination since catalyst performance is improved.

The use of a metal compound activated by using these compounds in combination is particularly preferable in that the curing start temperature and gel fraction can be obtained.

Although an action for obtaining such an effect is not clear, it is presumed that the coordination of the compound (B-1b) with a metal compound improves the catalytic activity. Therefore, as the compound (B-1b), it is preferable to select a compound that can be coordinated with a metal compound.

By improving a catalytic action in the transesterification reaction, the transesterification reaction can be performed at a lower temperature. Accordingly, a reaction temperature can be lowered and energy efficiency can be improved. Further, the metal compound can also be used in a case of performing a transesterification reaction of a compound having low heat resistance.

According to investigations by the present inventors, it has been clarified that the reactivity of a transesterification reaction in the related art is lowered in a state where a carboxyl group is present in the system. Therefore, curing at a high temperature is required in a case of using a transesterification reaction in an aqueous curable resin composition in which a carboxyl group is present.

According to investigations by the present inventors, it has been clarified that such a problem can be remarkably solved by using the compound (B-1b) in combination with the metal compound. That is, this makes it possible to further improve the catalytic activity and cause a reaction in the range of 80°C to 150°C. In addition, it is preferable that a reaction can proceed even in a system in which the reaction is difficult to proceed due to various factors. For example, it is preferable that a reaction can proceed even in a system in which a carboxyl group is present. Accordingly, the transesterification catalyst using the compound (B-1b) in combination with the metal compound can also be suitably used as a catalyst for a transesterification reaction in a water-based curable resin composition.

It has been known that a curable resin composition in the related art using a transesterification reaction as a thermosetting reaction is used in performing a transesterification reaction by using an acid catalyst. However, there are also various problems due to the presence of an acid in such a curable resin composition.

For example, an amine compound may be used as an additive such as a pigment dispersant. Further, when a coating material is made to be aqueous, it is widely practiced to introduce an acid group such as a carboxylic acid group or a sulfonic acid into a resin and neutralize the acid group with an amine compound and the like to make the coating material water-soluble. In this case, it is difficult to use such a resin in combination with an acidic catalyst. The problem is that the curable resin composition using a transesterification catalyst as a curing reaction is prevented from being made aqueous. It is also preferable that the curable resin composition according to the present invention can be a curable resin composition to which a basic compound is added since the curable resin composition according to the present invention can cause a good curing reaction without using an acid catalyst.

In addition, even when the curable resin composition according to the present invention is used as a solvent-based coating material composition, an aqueous coating material may be used in combination as a partial layer in a multilayer coating film. In this case, when the multilayer coating film is heated and cured at the same time, amines, ammonia, and the like may be generated from the other layers forming the multilayer coating film. Even in such a case, the catalyst is preferable in that satisfactory curing can be performed.

It is preferable to use a composition of the transesterification catalyst according to the present invention as a catalyst in a transesterification reaction under normal pressure. Further, it is preferable to use the transesterification catalyst according to the present invention as a transesterification catalyst in the curable resin composition using a transesterification reaction as a curing reaction.

The transesterification catalyst includes at least one compound (B-2) selected from the group consisting of an organophosphorus compound, urea, alkylated urea, a sulfoxide compound, pyridine, and pyridine derivatives. Hereinafter, these compounds will be described in detail.

The organophosphorus compound is not particularly limited, and examples thereof include phosphoric acid, phosphorous acid, phosphonic acid, phosphinic acid, phosphonious acid, organic phosphine oxide, organic phosphine compounds and their various esters, amides, and salts. Ester may be ester of alkyl, branched alkyl, substituted alkyl, bifunctional alkyl, alkyl ether, aryl, and substituted aryl. Amide may be amide of alkyl, branched alkyl, substituted alkyl, bifunctional alkyl, alkyl ether, aryl, and substituted aryl.

Among them, at least one compound selected from the group consisting of a phosphonate ester, a phosphate amide, and an organic phosphine oxide compound is particularly preferable. The most satisfactory transesterification catalyst function is obtained by using these organophosphorus compounds. Further specifically, organic phosphine oxide compounds such as triphenylphosphine oxide, trioctylphosphine oxide, and tricyclohexylphosphine oxide; phosphate amide compounds such as hexamethylphosphoric acid triamide and tris(N,N-tetramethylene) phosphate triamide, organic phosphine sulfide compounds such as triphenylphosphine sulfide, tributylphosphine sulfide, and trioctylphosphine sulfide, and the like can be suitably used.

The alkylated urea is not particularly limited, and examples thereof include urea, dimethylurea, and dimethylpropylene urea. The alkylated urea may have a cyclic structure as in dimethylpropylene urea or the like.

The alkylated thiourea is not particularly limited, and examples thereof include dimethyl thiourea.

Examples of the sulfoxide compound include dimethyl sulfoxide, and diphenyl sulfoxide.

Examples of the pyridine derivative include quinoline, isoquinoline, and nicotinic acid ester.

It is preferable that a transesterification catalyst of the present invention contains a compound (B-1a) and a compound (B-1b) at a ratio of (B-1a):(B-1b) = 100:1 to 1:100 (weight ratio). Particularly suitable results can be obtained by mixing the compounds at such a ratio. The lower limit is more preferably 50:1 and still more preferably 10:1. The upper limit is more preferably 1:50 and still more preferably 1:10.

It is preferable that the compound (B-1a) is contained in a proportion of 0.01 to 50% by weight with respect to the amount of a compound related to a reaction in a reaction system at the time of causing a reaction.

It is preferable that the compound (B-1b) is contained in a proportion of 0.01 to 50% by weight with respect to the amount of a compound related to a reaction in a reaction system at the time of causing a reaction.

The use of the transesterification catalyst of the present invention is not particularly limited, and the transesterification catalyst can be used for any purpose such as a curable resin composition using transesterification as a curing reaction, and a transesterification reaction in organic synthesis. For example, the transesterification catalyst can also be used in a reaction for substituting an alkyl group in a carboxylic acid ester compound such as (meth)acrylic acid ester (for example, a reaction for converting methyl (meth)acrylate to butyl (meth)acrylate).

It is preferable that in the resin composition according to the present invention, the physical properties can be particularly suitably obtained by a method of (1) using the zirconium compound as the transesterification catalyst and a method of (2) using the compound (B-1a) and compound (B-1b) as the transesterification catalyst.

When the transesterification catalysts in the methods (1) and (2) are used and a resin composition having particularly high transesterification reactivity is selected and used, it is possible to obtain a resin composition having a property that a curing start temperature is 100°C or lower and a gel fraction is 80% or more in a case of being cured under a condition of baking at 100°C or lower for 30 minutes.

Further, when zinc acetylacetonate is used as the transesterification catalyst and a resin composition having particularly high transesterification reactivity is selected and used, it is possible to obtain a resin composition having a property that a curing start temperature is 100°C or lower and a gel fraction is 80% or more in a case of being cured under a condition of baking at 100°C or lower for 30 minutes.

It is more preferable to use a metal compound as a catalyst in the curable resin composition according to the present invention. In the curable resin composition according to the present invention, the metal compound is particularly excellent from the viewpoint of catalytic activity. In particular, this tendency is remarkable in a curable resin composition having a primary and secondary alkyl ester groups.

Further, it is also preferable that the curable resin composition according to the present invention can be a curable resin composition to which a basic compound is added since the curable resin composition according to the present invention can cause a good curing reaction without using an acid catalyst.

It is preferable that the amount of the transesterification catalyst (B-1) used is 0.01% to 50% by weight with respect to the total weight of the resin component (A). Such a range is preferable in that a good curing reaction can be performed at a low temperature.

### (Photopolymerization initiator (B-2))

It is preferable that the curable resin composition according to the present invention contains a photopolymerization initiator (B-2) as the initiator (B).

The photopolymerization initiator is not particularly limited, and examples thereof include acetophenone-based initiators such as 1-hydroxycyclohexyl phenyl ketone, 2-hydroxy-2-methyl-1-phenylpropane-1-one, 2-methyl-1-[4-(methylthio)phenyl]-2-morpholinopropan-1-one, and 1-[4-(2-hydroxyethoxy)phenyl]-2-hydroxy-2-methyl-1-propane-1-one; benzoin-based initiators such as benzoin and 2,2-dimethoxy-1,2-diphenylethane-1-one; benzophenone-based initiators such as benzophenone, [4-(methylphenylthio)phenyl]phenylmethanone, 4-hydroxybenzophenone, 4-phenylbenzophenone, and 3,3',4,4'-tetra(t-butylperoxycarbonyl)benzophenone; and thioxanthone-based initiators such as 2-chlorothioxanthone and 2,4-diethylthioxanthone.

Examples of an accelerator include tertiary amines such as p-dimethylaminobenzoic acid ethyl ester and p-dimethylaminobenzoic acid isoamyl ester.

A content of the photopolymerization initiator (B-2) is not particularly limited, and it is preferable that the photopolymerization initiator (B-2) is blended at a ratio of 0.01% to 50% by weight with respect to a solid content weight of the resin component (A).

Considering coloring, physical properties, storage stability, and the like of the coating film, 0.5% to 10% by weight is more preferable.

The curable composition according to the present invention may further be used in combination with other crosslinking agents commonly used in the fields of coating materials and adhesives in addition to the components (A) and (B). The crosslinking agent that can be used is not particularly limited, and examples thereof include an isocyanate compound, a blocked isocyanate compound, a melamine resin, an epoxy resin, and a silane compound. In addition, vinyl ether, an anionic polymerizable monomer, a cationic polymerizable monomer, a radical polymerizable monomer, and the like may be used in combination. A curing agent for accelerating the reaction of the used crosslinking agent may be used in combination.

The other crosslinking agents are not essential, and it is preferable in that the curable resin composition according to the present invention can obtain satisfactory curability even when the crosslinking agent is not contained.

In a case where the crosslinking agent is a polyisocyanate compound and/or a melamine resin, it is preferable that a mixing amount with respect to a total amount of the resin component (A) and the crosslinking agent (that is, (amount of crosslinking agent)/(amount of crosslinking agent + amount of resin component) is 0.01 to 50% by weight. The range of such a mixing amount is preferable in that a curing reaction based on a transesterification reaction and a curing reaction based on another curing agent can be caused at the same time.

The lower limit is more preferably 0.01% by weight and still more preferably 1% by weight. The upper limit is more preferably 30% by weight and still more preferably 20% by weight.

In addition, as will be described later, when the resin composition is used as a protective layer for a transfer member, it is preferable to contain a lubricant as necessary. This not only roughs a surface of the protective layer, makes it easier to roll as a sheet and makes blocking less likely to occur, but also can increase resistance to rubbing and scratching.

It is more preferable that the curable resin composition according to the present invention has a curing start temperature of 130°C or lower during curing with heat and a gel fraction of 80% or more during curing under the condition of baking at 150°C for 30 minutes. Use of a low-temperature curable resin composition satisfying such conditions is preferable in that the low-temperature curable resin composition can be applied to many applications because of being capable of being applied to a material having low heat resistance.

In order to obtain a curable resin composition satisfying the low-temperature curability, it is important to select a catalyst and a resin composition. That is, in the transesterification reaction which is a curing reaction in the present invention, a curing temperature changes depending on a structure of a resin and a type of the transesterification catalyst to be used. Therefore, it is preferable to obtain low-temperature curability by appropriately selecting the structure of the resin and the type of the transesterification catalyst to be used.

The use of the curable resin composition according to the present invention is not particularly limited, and for example, the curable resin composition according to the present invention can also be used in a film used for in-mold molding. In this case, the curable resin composition according to the present invention may be applied onto a substrate and cured with heat to cure a film, and then molded and irradiated with energy rays to cure the film.

In a case where the curable resin composition is used as a curable coating material, an additive which is generally used in the field of coating materials, and other than the components may be used in combination. For example, a coloring pigment, an extender pigment, a bright pigment, and any combinations thereof may be used.

When a pigment is used, it is preferably contained in a total amount of 1% to 500% by weight, based on 100% by weight of the total solid content of the resin component. The lower limit is more preferably 3% by weight, and still more preferably 5 parts by weight. The upper limit is more preferably 400% by weight, and still more preferably 300% by weight.

Examples of the coloring pigment include titanium oxide, zinc white, carbon black, molybdenum red, Prussian blue, cobalt blue, an azo-based pigment, a phthalocyanine-based pigment, a quinacridone-based pigment, an isoindoline-based pigment, a threne-based pigment, a perylene-based pigment, a dioxazine-based pigment, a diketopyrrolopyrrole-based pigment, and any combinations thereof.

Examples of the extender pigment include clay, kaolin, barium sulfate, barium carbonate, calcium carbonate, talc, silica, and alumina white. Barium sulfate and/or talc are preferable, and barium sulfate is more preferable.

Examples of the bright pigment include aluminum (including vapor-deposited aluminum), copper, zinc, brass, nickel, aluminum oxide, mica, aluminum oxide coated with titanium oxide or iron oxide, mica coated with titanium oxide or iron oxide, glass flakes, hologram pigments, and any combinations thereof. The aluminum pigment includes non-leafing type aluminum and leafing type aluminum.

It is preferable that the coloring pigment is blended in the curable resin composition in a state of being dispersed by a pigment-dispersed resin. The amount of the coloring pigment may change depending on a type of pigment or the like, and generally, is preferably in a range of about 0.1 to about 300 parts by mass, and more preferably within the range of about 1 to about 150 parts by mass with respect to 100 parts by mass of the solid content of a resin component contained in the pigment-dispersed resin.

The curable coating material may further contain, as desired, additives for coating materials such as an organic solvent, a thickener, a UV absorber, a light stabilizer, a defoaming agent, a plasticizer, a surface conditioner, an anti-settling agent, a dispersant, an anti-color separation agent, a rheology control agent, a leveling agent, a substrate wetting agent, and a slip agent.

Examples of the thickener include inorganic thickeners such as silicate, metal silicate, montmorillonite, and colloidal alumina; polyacrylic acid-based thickeners such as copolymers of (meth)acrylic acid and (meth)acrylic acid ester, and sodium polyacrylate; associative type thickeners having a hydrophilic part and a hydrophobic part in one molecule and showing a thickening effect by an adsorption of the hydrophobic part on the surface of the pigment or emulsion particles in the coating material, or an association of the hydrophobic parts, in an aqueous medium; cellulose derivative-based thickeners such as carboxymethyl cellulose, methyl cellulose, and hydroxyethyl cellulose; protein-based thickeners such as casein, sodium caseinate, and ammonium caseinate; alginic acid-based thickeners such as sodium alginate; polyvinyl-based thickeners such as polyvinyl alcohol, polyvinyl pyrrolidone, and polyvinyl benzyl ether copolymers; polyether-based thickeners such as pluronic polyethers, polyether dialkyl esters, polyether dialkyl ethers, and polyether epoxy modified products; maleic anhydride copolymer-based thickeners such as a partial ester of a vinyl methyl ether-maleic anhydride copolymer; polyamide-based thickeners such as a polyamide amine salt; and any combinations thereof.

The polyacrylic acid-based thickener is commercially available, and examples thereof include "ACRYSOLASE-60", "ACRYSOLTT-615", and "ACRYSOLRM-5" (trade names) manufactured by Rohm and Haas Company, and "SN Thickener 613", "SN Thickener 618", "SN Thickener 630", "SN Thickener 634", and "SN Thickener 636" (trade names) manufactured by San Nopco CO., LTD.

The associative type thickener is commercially available, and examples thereof include "UH-420", "UH-450", "UH-462", "UH-472", "UH-540", "UH-752", "UH-756VF", and "UH-814N" (trade names) manufactured by ADEKA Corporation, "ACRYSOLRM-8W", "ACRYSOLRM-825", "ACRYSOLRM-2020NPR", "ACRYSOLRM-12W", and "ACRYSOLSCT-275" (trade names) manufactured by Rohm and Haas Company, and "SN Thickener 612", "SN Thickener 621N", "SN Thickener 625N", "SN Thickener 627N", and "SN Thickener 660 T" (trade names) manufactured by San Nopco CO., LTD.

It is preferable to use an acrylic pigment-dispersed resin as the pigment-dispersed resin. More specifically, examples thereof include an acrylic resin obtained by polymerizing a polymerizable unsaturated monomer with a polymerization initiator in the presence of a hydrophilic organic solvent.

Examples of the polymerizable unsaturated monomer include compounds exemplified in the synthesis of a resin, and the compounds can be used in appropriate combinations.

The pigment-dispersed resin is preferably a resin that can be dissolved or dispersed in water. Specifically, the pigment-dispersed resin has a hydroxyl value of preferably 10 mgKOH/g to 100 mgKOH/g and more preferably 20 mgKOH/g to 70 mgKOH/g, and has an acid value of preferably 10 mgKOH/g to 80 mgKOH/g and more preferably 20 mgKOH/g to 60 mgKOH/g.

Examples of the hydrophilic organic solvent used for the polymerization include: alcoholic organic solvents such as methanol, ethanol, isopropanol, n-butanol, and isobutanol; ether-based organic solvents such as dioxane and tetrahydrofuran; ethylene glycol ether-based organic solvents such as ethylene glycol monomethyl ether, ethylene glycol monoethyl ether, ethylene glycol mono n-propyl ether, ethylene glycol monoisopropyl ether, ethylene glycol mono n-butyl ether, ethylene glycol monoisobutyl ether, and ethylene glycol monotert-butyl ether; diethylene glycol ether-based organic solvents such as diethylene glycol monomethyl ether, diethylene glycol monoethyl ether, diethylene glycol mono n-propyl ether, diethylene glycol monoisopropyl ether, diethylene glycol mono n-butyl ether, diethylene glycol monoisobutyl ether, and diethylene glycol monotert-butyl ether; propylene glycol ether-based organic solvents such as propylene glycol monomethyl ether, propylene glycol monoethyl ether, propylene glycol mono n-propyl ether, and propylene glycol monoisopropyl ether; dipropylene glycol ether-based organic solvents such as dipropylene glycol monomethyl ether, dipropylene glycol monoethyl ether, dipropylene glycol mono n-propyl ether, and dipropylene glycol monoisopropyl ether; ester-based organic solvents such as ethyl acetate, butyl acetate, isobutyl acetate, and 3-methoxybutyl acetate; and combinations thereof.

It is preferable that the curable resin composition according to the present invention contains a pigment-dispersed resin of preferably 5% to 70% by mass, and more preferably 7% to 61% by mass as a solid content, based on the sum of solid content masses of the resin and pigment-dispersed resin. The ranges are preferable from the viewpoints of storage stability of the curable resin composition, and finishing properties, water resistance, intermediate grinding properties, and the like of a colored coating film formed by using a colored coating material composition of the present invention.

The curable resin composition according to the present invention may further be used in combination with other crosslinking agents commonly used in the fields of coating materials and adhesives in addition to the above-mentioned components. The crosslinking agent that can be used is not particularly limited, and examples thereof include an isocyanate compound, a blocked isocyanate compound, a melamine resin, an epoxy resin, and a silane compound. In addition, vinyl ether, an anionic polymerizable monomer, a cationic polymerizable monomer, and a radical polymerizable monomer, and the like may be used in combination. A curing agent for accelerating the reaction of the used crosslinking agent may be used in combination.

An object to which the curable resin composition can be applied is not particularly limited, and various examples thereof include an outer plate portion of an automobile body such as an automobile, a truck, a motorcycle, and a bus; automobile parts; house electrical products such as a mobile phone and an audio device, a building material, furniture, an adhesive, a film and a glass coating agent. In addition, examples thereof also include pre-coated metal that forms a coating film by high-temperature short-time curing and coating on metal cans. Further, examples thereof also include electrodeposition coating materials, adhesives, and the use thereof in particle boards.

The object to be coated may be one obtained by applying a surface treatment such as a phosphate treatment, a chromate treatment, a composite oxide treatment or the like to the metal surface of the metal material and a car body molded therefrom, or may be an object to be coated having a coating film.

As the object to be coated having the coating film, there can be mentioned an object which is subjected to a surface treatment as desired and has an undercoating film formed thereon. In particular, a car body having an undercoating film formed by an electrodeposition coating material is preferable, and a car body having an undercoating film formed by a cationic electrodeposition coating material is more preferable.

The object to be coated may be one obtained by subjecting the surface of plastic such as the plastic material and an automobile part molded therefrom to a surface treatment, primer coating or the like as desired. Further, the plastic material and the metal material may be combined.

The method of applying the curable resin composition is not particularly limited, and examples thereof include air spray coating, airless spray coating, rotary atomization coating, and curtain coating, and air spray coating, rotary atomization coating, and the like are preferable. During coating, electrostatic application may be performed as desired. By the coating method, a wet coating film can be formed from the water-borne coating material composition.

It is preferable that the coating material composition used here is designed by appropriately selecting a material in consideration of a possibility that when a thermosetting reaction is carried out first, components may decompose or volatilize during curing with heat.

The present invention relates to a cured film formed by cross-linking the curable resin composition.

Such a cured film has sufficient performances such that the cured film can be used as a coating material and an adhesive.

The cured film also includes a cured film formed by the method for forming a multilayer coating film.

When the curable resin composition according to the present invention is cured, the curable resin composition may be cured with heat and then cured with energy rays, or the curable resin composition may be cured with energy rays and then cured with heat. Processes can be appropriately selected depending on the purpose.

The present invention also relates to a coating resin molded body in which a curable resin layer made of a curable resin composition is formed on a resin substrate such as a substrate film, and the curable resin composition contains: a resin component (A) containing a (meth)acryloyl group (a), a hydroxy group (b), and an alkyl ester group (c); and an initiator (B). A multilayer film can be mentioned as a typical shape of such a coating resin molded body. Such a resin molded body includes all of those in a state before the curable resin layer is cured, those in a state where a part of the curable resin layer is uncured, and those in a state where the curable resin layer is completely cured.

Examples of such a multilayer film include those used for any purpose such as functional materials such as electronic materials, and design films for imparting designability such as decorative films.

For example, in electronic materials, a functional material is manufactured by laminating a functional layer on a substrate film and curing the functional layer, which is performed on many materials. Specifically, examples of the multilayer film include an optical film for a display, a printed wiring board, and various batteries.

It is also a general-purpose technique to form, on a substrate film, a design layer having a color, a pattern, and the like and having curability, and transfer the design layer to a material to be decorated to decorate the material to be decorated. The curable resin composition according to the present invention can also be used as the design layer in such a transfer film.

In most cases, such a design layer contains a curable resin composition as a base. Therefore, the curable resin composition according to the present invention can be used as the curable resin composition contained in such a design layer.

In particular, the curable resin composition according to the present invention can be suitably used in applications where curing is performed in two stages.

In the multilayer film and covering sheet as described above, the curable resin composition according to the present invention can be suitably used in applications such as performing first-stage curing at the stage of processing into a multilayer film shape or pre-molding, and then performing second-stage curing after performing a molding process and the like. That is, it can be mentioned that the curable resin composition according to the present invention is used in a method in which a form can be maintained in the first stage and a problem of blocking does not occur, and a layer in a state of being flexible enough to be deformed is formed, and then a second deformation is caused after the deformation.

Examples of the resin substrate used in such a case include those having low relatively heat resistance such as polyethylene terephthalate, polypropylene, polyethylene, polycarbonate, ABS (acrylonitrile-butadiene-styrene copolymer), and engineering plastics having high heat resistance such as polyphenylene ether, polyphenylene sulfide, and polyetheretherketone.

The multilayer film according to the present invention can be obtained by applying a composition containing the curable resin composition and a solvent onto a substrate film by a known method and drying the coated substrate film by a known method. In the multilayer film, it is preferable that the curable resin layer (2) has a thickness of 1 µm to 100 µm.

In addition, the multilayer film according to the present invention may be obtained by partially curing the curable resin layer (2) by irradiating the curable resin layer (2) with energy rays or by heating the curable resin layer (2).

The curable resin composition according to the present invention can also be used as a binder in a composition containing a large amount of inorganic particles.

In many fields such as the field of electronic materials, the field of energy such as batteries, and the field of optical materials, a film is formed of an inorganic material and performance of the inorganic material is utilized. In this case, inorganic particles can be used as a raw material, and the inorganic particles can be formed into a film or other desired shape. In this case, in order to form the inorganic particles into a desired shape, a resin binder is often used in combination with the inorganic particles. The curable resin composition according to the present invention can also be used as such a resin binder.

For example, a high refractive index film is formed by using zinc oxide, zirconium oxide, titanium oxide, and the like. A low refractive index film is formed in a case of using silica particles, particularly hollow silica. The high refractive index film and the low refractive index film can be used as an optical antireflection film by laminating, for use, the high refractive index film and the low refractive index film as a thin film having a level of 100 nm.

In addition, a film is formed by using other inorganic particles, the film can also be used as a functional film other than a film or a sheet, such as a conductive film, an insulating film, a thermal conducting film, or a battery electrode.

In this way, the curable resin composition according to the present invention can be cured in two stages and can also be patterned by ultraviolet rays, and thus can be widely applied to complicated shapes and processes.

In addition to these multilayered films described above, the curable resin composition according to the present invention can also be used by coating a substrate with a single layer as a protective film.

When the curable resin composition contains inorganic particles and a curable resin composition, it is preferable to contain 1% to 90% by weight of the inorganic particles, and more preferably 20% to 70% by weight in the solid content. The inorganic particles are not particularly limited, and a metal powder, inorganic oxide particles such as aluminum oxide, zinc oxide, titanium oxide, zirconium oxide, and silicon dioxide, and the like can be used. In order to improve dispersibility of an organic material and the like, these metals may be appropriately surface-treated.

### Examples

Hereinafter, the present invention will be explained with reference to examples. However, the present invention is not limited to these examples. In addition, part(s) represents part(s) by weight in the examples.

### Synthesis Example 1

55 parts of ethylene glycol monoacetoacetate monomethacrylate, 66 parts of t-butyl acrylate, 71 parts of potassium carbonate, 3 parts of 18-crown-6 ether, and 121 parts of tetrahydrofuran were mixed and stirred at 50°C for 3 hours. After the completion of the reaction, cyclohexane and water were added and washed with water. An organic layer was neutralized with a saturated aqueous ammonium chloride solution and washed twice with water, and the obtained organic layer was concentrated under reduced pressure to obtain a monomer A.

### Synthesis Example 2

55 parts of ethylene glycol monoacetoacetate monomethacrylate, 45 parts of methyl acrylate, 71 parts of potassium carbonate, 3 parts of 18-crown-6 ether, and 100 parts of tetrahydrofuran were mixed and stirred at 50°C for 3 hours. After the completion of the reaction, cyclohexane and water were added and washed with water. An organic layer was neutralized with a saturated aqueous ammonium chloride solution and washed twice with water, and the obtained organic layer was concentrated under reduced pressure to obtain a monomer B.

### Synthesis Example 3

35 parts of methyl methacrylate (Light Ester M, a product manufactured by Kyoeisha Chemical Co., Ltd.), 25 parts of t-butyl acrylate (Light Acrylate TB, a product manufactured by Kyoeisha Chemical Co., Ltd.), 30 parts of hydroxyethyl acrylate (Light Ester HOA(N), a product manufactured by Kyoeisha Chemical Co., Ltd.:), and 10 parts of styrene were mixed as a monomer mixed solution, and 5 parts of AIBN as an initiator was dissolved in xylene to prepare an initiator solution.

50 parts of xylene and 50 parts of butyl acetate were charged into a stirrable flask, and the monomer solution and the initiator solution were added dropwise while nitrogen was enclosed. A polymerization temperature at this time was 100°C. The dropwise addition was carried out for 2 hours, and further aging was carried out at 100°C for 4 hours. The obtained polymer solution was cooled, and then 7.2 parts of Karenz AOI (a product manufactured by Showa Denko K.K.) and 0.06 parts of Neostan U-820 (a product manufactured by Nitto Kasei Co., Ltd.) were added and reacted at 65°C for 5 hours to obtain a polymer solution A.

### Synthesis Example 4

35 parts of methyl methacrylate (Light Ester M, a product manufactured by Kyoeisha Chemical Co., Ltd.), 25 parts of the monomer A, 30 parts of hydroxyethyl acrylate (Light Ester HOA(N), a product manufactured by Kyoeisha Chemical Co., Ltd.), and 10 parts of styrene were mixed as a monomer mixed solution, and 5 parts of AIBN as an initiator was dissolved in xylene to prepare an initiator solution.

50 parts of xylene and 50 parts of butyl acetate were charged into a stirrable flask, and the monomer solution and the initiator solution were added dropwise while nitrogen was enclosed. A polymerization temperature at this time was 100°C. The dropwise addition was carried out for 2 hours, and further aging was carried out at 100°C for 4 hours. The obtained polymer solution was cooled, and then 7.2 parts of Karenz AOI (a product manufactured by Showa Denko K.K.) and 0.06 parts of Neostan U-820 (a product manufactured by Nitto Kasei Co., Ltd.) were added and reacted at 65°C for 5 hours to obtain a polymer solution B.

### Synthesis Example 5

35 parts of methyl methacrylate (Light Ester M, a product manufactured by Kyoeisha Chemical Co., Ltd.), 25 parts of the monomer B, 30 parts of hydroxyethyl acrylate (Light Ester HOA(N), a product manufactured by Kyoeisha Chemical Co., Ltd.), and 10 parts of styrene were mixed as a monomer mixed solution, and 5 parts of AIBN as an initiator was dissolved in xylene to prepare an initiator solution.

50 parts of xylene and 50 parts of butyl acetate were charged into a stirrable flask, and the monomer solution and the initiator solution were added dropwise while nitrogen was enclosed. A polymerization temperature at this time was 100°C. The dropwise addition was carried out for 2 hours, and further aging was carried out at 100°C for 4 hours. The obtained polymer solution was cooled, and then 7.2 parts of Karenz AOI (a product manufactured by Showa Denko K.K.) and 0.06 parts of Neostan U-820 (a product manufactured by Nitto Kasei Co., Ltd.) were added and reacted at 65°C for 5 hours to obtain a polymer solution C.

### Synthesis Example 6

55 parts of methyl methacrylate (Light Ester M, a product manufactured by Kyoeisha Chemical Co., Ltd.), 30 parts of hydroxyethyl acrylate (Light Ester HOA(N), a product manufactured by Kyoeisha Chemical Co., Ltd.), and 15 parts of styrene were mixed as a monomer mixed solution, and 5 parts of AIBN as an initiator was dissolved in xylene to prepare an initiator solution.

50 parts of xylene and 50 parts of butyl acetate were charged into a stirrable flask, and the monomer solution and the initiator solution were added dropwise while nitrogen was enclosed. A polymerization temperature at this time was 100°C. The dropwise addition was carried out for 2 hours, and further aging was carried out at 100°C for 4 hours. The obtained polymer solution was cooled, and then 7.2 parts of Karenz AOI (a product manufactured by Showa Denko K.K.) and 0.06 parts of Neostan U-820 (a product manufactured by Nitto Kasei Co., Ltd.) were added and reacted at 65°C for 5 hours to obtain a comparative polymer solution A.

### Example 1

Phenolsulfonic acid (PHS) and Lunacure 200 (a product manufactured by DKSH Japan Co., Ltd.) were mixed with the polymer solution A respectively at a ratio of 2 wt% and at a ratio of 3 wt% with respect to a solid content of the polymer solution, a 200 µm coating film was produced in WET by using an applicator, and further the coating film was dried at 80°C for 5 minutes and then temporarily cured by UV irradiation (1,000 mJ/cm²). Then, the coating film was baked at 150°C for 30 minutes to obtain a cured film. A rubbing test and DMA measurement were carried out on the obtained cured film.

### Example 2

Phenolsulfonic acid (PHS) and Lunacure 200 (a product manufactured by DKSH Japan Co., Ltd.) were mixed with the polymer solution B respectively at a ratio of 2 wt% and at a ratio of 3 wt% with respect to a solid content of the polymer solution, a 200 µm coating film was produced in WET by using an applicator, and further the coating film was dried at 80°C for 5 minutes and then temporarily cured by UV irradiation (1,000 mJ/cm²). Then, the coating film was baked at 150°C for 30 minutes to obtain a cured film. A rubbing test and DMA measurement were carried out on the obtained cured film.

### Example 3

Neostan U-820 (a product manufactured by Nitto Kasei Co., Ltd.) and Lunacure 200 (a product manufactured by DKSH Japan Co., Ltd.) were mixed with the polymer solution C both at a ratio of 3 wt% with respect to a solid content of the polymer solution, a 200 µm coating film was produced in WET by using an applicator, and further the coating film was dried at 80°C for 5 minutes and then temporarily cured by UV irradiation (1,000 mJ/cm²). Then, the coating film was baked at 150°C for 30 minutes to obtain a cured film. A rubbing test and DMA measurement were carried out on the obtained cured film.

### Comparative Example 1

Phenolsulfonic acid (PHS) and Lunacure 200 (a product manufactured by DKSH Japan Co., Ltd.) were mixed with the comparative polymer solution A respectively at a ratio of 2 wt% and at a ratio of 3 wt% with respect to a solid content of the polymer solution, a 200 µm coating film was produced on a PET film in WET by using an applicator, and further the coating film was dried at 80°C for 5 minutes and then temporarily cured by UV irradiation (1,000 mJ/cm²). Then, the coating film was baked at 150°C for 30 minutes to obtain a cured film. A rubbing test and DMA measurement were carried out on the obtained cured film.

**[Table 1]**

| | Example 1 | Example 2 | Example 3 | Comparative Example 1 |
|---|---|---|---|---|
| Tack after temporary curing | No | No | No | No |
| Xylene rubbing | ○ | ○ | ○ | × |
| Inter-crosslinking point molecular weight | ○ | ○ | ○ | × |
| Coating film appearance | ○ | ⊚ | ⊚ | |

Regarding tack after temporary curing, a case where the coating film after UV irradiation remained sticky in a case of being touched with a finger was evaluated as tack, and a case where the coating film after UV irradiation was not sticky was evaluated as tack-free.

In xylene rubbing, the cured film was rubbed 10 times with a medicinal gauze impregnated with xylene. A case where the film was whitened and dissolved after the xylene was dried was evaluated as ×, a case where the film was slightly dissolved was evaluated as Δ, and a case where there was no change was evaluated as B○

An inter-crosslinking point molecular weight was calculated according to the following equation after the cured film was peeled off from the PET film and DMA was measured. Regarding evaluation results, one having an inter-crosslinking point molecular weight of 2000 or less was evaluated as ○, i.e., a good three-dimensionally crosslinked coating film was obtained, one having an inter-crosslinking point molecular weight of 2000 to 5000 was evaluated as Δ, i.e., a coating film having a slightly low crosslink density was obtained, and one having an inter-crosslinking point molecular weight of more than 5000 was evaluated as ×, which had insufficient cross-linking.

Inter-crosslinking point molecular weight = 3 × 8.31 × (absolute temperature when storage elastic modulus is minimum value)/(minimum value of storage elastic modulus)

The coating film appearance was evaluated visually after curing. One without poor appearance was evaluated as ⊚, one with no problem in the target film thickness but with bubbles on edges of the coating film was evaluated as ○, and one having no practical application was evaluated as ×.

### Synthesis Example 7

30 parts of methyl methacrylate (Light Ester M, a product manufactured by Kyoeisha Chemical Co., Ltd.), 25 parts of t-butyl acrylate (Light Acrylate TB, a product manufactured by Kyoeisha Chemical Co., Ltd.), 25 parts of hydroxyethyl acrylate (Light Ester HOA(N), a product manufactured by Kyoeisha Chemical Co., Ltd.), 10 parts of styrene, and 10 parts of glycidyl methacrylate (Light Ester G, a product manufactured by Kyoeisha Chemical Co., Ltd.) were mixed as a monomer mixed solution, and 5 parts of AIBN as an initiator was dissolved in xylene to prepare an initiator solution.

50 parts of xylene and 50 parts of butyl acetate were charged into a stirrable flask, and the monomer solution and the initiator solution were added dropwise while nitrogen was enclosed. A polymerization temperature at this time was 100°C. The dropwise addition was carried out for 2 hours, and further aging was carried out at 100°C for 4 hours. The obtained polymer solution was cooled, and then 5.3 parts of acrylic acid and 1.6 parts of triphenylphosphine were added and reacted at 90°C for 16 hours to obtain a polymer solution D.

### Synthesis Example 8

30 parts of methyl methacrylate (Light Ester M, a product manufactured by Kyoeisha Chemical Co., Ltd.), 25 parts of the monomer A, 25 parts of hydroxyethyl acrylate (Light Ester HOA(N), a product manufactured by Kyoeisha Chemical Co., Ltd.), 10 parts of styrene, and 10 parts of glycidyl methacrylate (Light Ester G, a product manufactured by Kyoeisha Chemical Co., Ltd.) were mixed as a monomer mixed solution, and 5 parts of AIBN as an initiator was dissolved in xylene to prepare an initiator solution.

50 parts of xylene and 50 parts of butyl acetate were charged into a stirrable flask, and the monomer solution and the initiator solution were added dropwise while nitrogen was enclosed. A polymerization temperature at this time was 100°C. The dropwise addition was carried out for 2 hours, and further aging was carried out at 100°C for 4 hours. The obtained polymer solution was cooled, and then 5.3 parts of acrylic acid and 1.6 parts of triphenylphosphine were added and reacted at 90°C for 16 hours to obtain a polymer solution E.

### Example 4

Phenolsulfonic acid (PHS) and Lunacure 200 (a product manufactured by DKSH Japan Co., Ltd.) were mixed with the polymer solution D respectively at a ratio of 2 wt% and at a ratio of 3 wt% with respect to a solid content of the polymer solution, a 200 µm coating film was produced in WET by using an applicator, and further the coating film was dried at 80°C for 5 minutes and then temporarily cured by UV irradiation (1,000 mJ/cm²). Then, the coating film was baked at 150°C for 30 minutes to obtain a cured film. A rubbing test and DMA measurement were carried out on the obtained cured film.

### Example 5

Phenolsulfonic acid (PHS) and Lunacure 200 (a product manufactured by DKSH Japan Co., Ltd.) were mixed with the polymer solution E respectively at a ratio of 2 wt% and at a ratio of 3 wt% with respect to a solid content of the polymer solution, a 200 µm coating film was produced in WET by using an applicator, and further the coating film was dried at 80°C for 5 minutes and then temporarily cured by UV irradiation (1,000 mJ/cm²). Then, the coating film was baked at 150°C for 30 minutes to obtain a cured film. A rubbing test and DMA measurement were carried out on the obtained cured film.

**[Table 2]**

| | Example 4 | Example 5 |
|---|---|---|
| Tack after temporary curing | No | No |
| Xylene rubbing | ○ | ○ |
| Inter-crosslinking point molecular weight | ○ | ○ |
| Coating film appearance | ○ | ⊚ |

### Synthesis Example 9

40 parts of methyl methacrylate (Light Ester M, a product manufactured by Kyoeisha Chemical Co., Ltd.), 30 parts of the monomer A, 10 parts of styrene, and 20 parts of glycidyl methacrylate (Light Ester G, a product manufactured by Kyoeisha Chemical Co., Ltd.:) were mixed as a monomer mixed solution, and 5 parts of AIBN as an initiator was dissolved in xylene to prepare an initiator solution.

50 parts of xylene and 50 parts of butyl acetate were charged into a stirrable flask, and the monomer solution and the initiator solution were added dropwise while nitrogen was enclosed. A polymerization temperature at this time was 100°C. The dropwise addition was carried out for 2 hours, and further aging was carried out at 100°C for 4 hours. The obtained polymer solution was cooled, and then 10.6 parts of acrylic acid and 1.6 parts of triphenylphosphine were added and reacted at 90°C for 16 hours to obtain a polymer solution F.

### Synthesis Example 10

60 parts of methyl methacrylate (Light Ester M, a product manufactured by Kyoeisha Chemical Co., Ltd.), 20 parts of styrene, and 20 parts of glycidyl methacrylate (Light Ester G, a product manufactured by Kyoeisha Chemical Co., Ltd.) were mixed as a monomer mixed solution, and 5 parts of AIBN as an initiator was dissolved in xylene to prepare an initiator solution.

50 parts of xylene and 50 parts of butyl acetate were charged into a stirrable flask, and the monomer solution and the initiator solution were added dropwise while nitrogen was enclosed. A polymerization temperature at this time was 100°C. The dropwise addition was carried out for 2 hours, and further aging was carried out at 100°C for 4 hours. The obtained polymer solution was cooled, and then 10.6 parts of acrylic acid and 1.6 parts of triphenylphosphine were added and reacted at 90°C for 16 hours to obtain a comparative polymer solution B.

### Synthesis Example 11

30 parts of methyl methacrylate (Light Ester M, a product manufactured by Kyoeisha Chemical Co., Ltd.), 25 parts of hydroxyethyl acrylate (Light Ester HOA(N), a product manufactured by Kyoeisha Chemical Co., Ltd.), 10 parts of styrene, and 10 parts of glycidyl methacrylate (Light Ester G, a product manufactured by Kyoeisha Chemical Co., Ltd.) were mixed as a monomer mixed solution, and 1 part of AIBN as an initiator was dissolved in xylene to prepare an initiator solution.

50 parts of xylene and 50 parts of butyl acetate were charged into a stirrable flask, and the monomer solution and the initiator solution were added dropwise while nitrogen was enclosed. A polymerization temperature at this time was 100°C. The dropwise addition was carried out for 2 hours, and further aging was carried out at 100°C for 4 hours to obtain a polymer solution G.

### Examples 6 and 7 and Comparative Examples 2 and 3

Monomers and catalysts were mixed in a blending ratio shown in the following table, a 200 µm coating film was produced in WET by using an applicator, and further the coating film was dried at 80°C for 5 minutes and then temporarily cured by UV irradiation (1,000 mJ/cm2). Then, the coating film was baked at 150°C for 30 minutes to obtain a cured film. A rubbing test and DMA measurement were carried out on the obtained cured film.

**[Table 3]**

| | Example 6 | Example 7 | Example 8 | Comparative Example 2 | Comparative Example 3 |
|---|---|---|---|---|---|
| Polymer solution F | 7 | 7 | 9 | | |
| Polymer solution G | 3 | | | | 3 |
| A-405^{∗} | | 3 | | | |
| Comparative polymer solution B | | | | 10 | 7 |
| Hydroxyethyl acrylate | | | 0.5 | | |
| Lunacure 200 | 0.15 | 0.15 | 0.15 | 0.15 | 0.15 |
| PHS | 0.15 | 0.15 | 0.15 | 0.15 | 0.15 |
| Tack after temporary curing | No | No | No | No | No |
| Xylene rubbing | ○ | ○ | ○ | × | × |
| Inter-crosslinking point molecular weight | ○ | ○ | ○ | × | × |

| | | | | | |
|---|---|---|---|---|---|
| ^{∗}A product manufactured by DIC Co., Ltd.: Acrydic A-405 | | | | | |

### Examples 9 to 11 and Comparative Example 4

Monomers and catalysts were mixed in a blending ratio shown in the following table, a 200 µm coating film was produced in WET by using an applicator, and then the coating film was temporarily cured by UV irradiation (1,000 mJ/cm²). Then, the coating film was baked at 150°C for 30 minutes to obtain a cured film. A rubbing test and DMA measurement were carried out on the obtained cured film.

**[Table 4]**

| | Example 9 | Example 10 | Example 11 | Comparative Example 4 |
|---|---|---|---|---|
| t-butyl acrylate | 2 | | | |
| Monomer A | | 2 | | |
| Monomer B | | | 2 | |
| Butyl methacrylate | | | | 2 |
| Hydroxyethyl acrylate | 2 | 2 | 2 | 2 |
| Epoxy Ester 3000A | 1 | 1 | 1 | 1 |
| Lunacure 200 | 0.15 | 0.15 | 0.15 | 0.15 |
| PHS | 0.15 | 0.15 | 0.15 | 0.15 |
| Tack after temporary curing | No | No | No | No |
| Xylene rubbing | ○ | ○ | ○ | × |
| Inter-crosslinking point molecular weight | ○ | ○ | ○ | × |
| Coating film appearance | ○ | ⊚ | ⊚ | |

### Synthesis Example 12

35 parts of methyl methacrylate (Light Ester M, a product manufactured by Kyoeisha Chemical Co., Ltd.), 25 parts of the monomer B, 30 parts of hydroxyethyl acrylate (Light Ester HOA(N), a product manufactured by Kyoeisha Chemical Co., Ltd.), 10 parts of styrene, and 15 parts of methacryloyloxyethyl succinate (Light Ester HO-MS (N), a product manufactured by Kyoeisha Chemical Co., Ltd.) were mixed as a monomer mixed solution, and 5 parts of 1,1,3,3-tetramethylbutylperoxy-2-ethyl hexanoate (Perocta O manufactured by Nippon Oil & Fats Co., Ltd.) as an initiator was dissolved in butyl acetate to prepare an initiator solution.

115 parts of butyl acetate was charged into a stirrable flask, and the monomer solution and the initiator solution were added dropwise while nitrogen was enclosed. A polymerization temperature at this time was 100°C. The dropwise addition was carried out for 2 hours, and further aging was carried out at 100°C for 4 hours. The obtained polymer solution was cooled, and then 7.2 parts of Karenz AOI (a product manufactured by Showa Denko K.K.) and 0.06 parts of Neostan U-820 (a product manufactured by Nitto Kasei Co., Ltd.) were added and reacted at 65°C for 5 hours to obtain a polymer solution H.

### Synthesis Example 13

35 parts of methyl methacrylate (Light Ester M, a product manufactured by Kyoeisha Chemical Co., Ltd.), 25 parts of dimethyl 2-methyleneglutarate, 30 parts of hydroxyethyl acrylate (Light Ester HOA(N), a product manufactured by Kyoeisha Chemical Co., Ltd.), 10 parts of styrene, and 15 parts of methacryloyloxyethyl succinate (Light Ester HO-MS(N), a product manufactured by Kyoeisha Chemical Co., Ltd.) were mixed as a monomer mixed solution, and 5 parts of 1,1,3,3-tetramethylbutylperoxy-2-ethyl hexanoate (Perocta O manufactured by Nippon Oil & Fats Co., Ltd.) as an initiator was dissolved in butyl acetate to prepare an initiator solution.

115 parts of butyl acetate was charged into a stirrable flask, and the monomer solution and the initiator solution were added dropwise while nitrogen was enclosed. A polymerization temperature at this time was 100°C. The dropwise addition was carried out for 2 hours, and further aging was carried out at 100°C for 4 hours. The obtained polymer solution was cooled, and then 7.2 parts of Karenz AOI (a product manufactured by Showa Denko K.K.) and 0.06 parts of Neostan U-820 (a product manufactured by Nitto Kasei Co., Ltd.) were added and reacted at 65°C for 5 hours to obtain a polymer solution I.

### Example 12

Monobutyltin oxide (MBTO, a product manufactured by Nitto Kasei Co., Ltd.) and Lunacure 200 (a product manufactured by DKSH Japan Co., Ltd.) were mixed with the polymer solution H both at a ratio of 3 wt% with respect to a solid content of the polymer solution, a 200 µm coating film was produced in WET by using an applicator, and further the coating film was dried at 80°C for 5 minutes to obtain a coating film. A part of the obtained coating film was masked and was then temporarily cured by UV irradiation (1,000 mJ/cm²). The coating film was then immersed in a 1% tetramethylammonium hydroxide solution at room temperature for 5 minutes and washed with pure water to remove the uncured part. Then, the coating film was baked at 150°C for 30 minutes, and a rubbing test and DMA measurement were carried out on the obtained cured film.

### Example 13

Monobutyltin oxide (MBTO, a product manufactured by Nitto Kasei Co., Ltd.) and Lunacure 200 (a product manufactured by DKSH Japan Co., Ltd.) were mixed with the polymer solution I both at a ratio of 3 wt% with respect to a solid content of the polymer solution, a 200 µm coating film was produced in WET by using an applicator, and further the coating film was dried at 80°C for 5 minutes to obtain a coating film. A part of the obtained coating film was masked and was then temporarily cured by UV irradiation (1,000 mJ/cm²). The coating film was then immersed in a 1% tetramethylammonium hydroxide solution at room temperature for 5 minutes and washed with pure water to remove the uncured part. Then, the coating film was baked at 150°C for 30 minutes, and a rubbing test and DMA measurement were carried out on the obtained cured film.

### Example 14

MBTO (a product manufactured by Nitto Kasei Co., Ltd.) and Lunacure 200 (a product manufactured by DKSH Japan Co., Ltd.) were mixed with the polymer solution H, which was neutralized by dimethylethanolamine, both at a ratio of 3 wt% with respect to a solid content of the polymer solution, a 200 µm coating film was produced in WET by using an applicator, and further the coating film was dried at 80°C for 5 minutes to obtain a coating film. A part of the obtained coating film was masked and was then temporarily cured by UV irradiation (1,000 mJ/cm²). Then, the coating film was immersed in pure water at room temperature for 5 minutes and washed with the pure water to remove the uncured part. Then, the coating film was baked at 150°C for 30 minutes, and a rubbing test and DMA measurement were carried out on the obtained cured film.

### Example 15

MBTO (a product manufactured by Nitto Kasei Co., Ltd.) and Lunacure 200 (a product manufactured by DKSH Japan Co., Ltd.) were mixed with the polymer solution I, which was neutralized by dimethylethanolamine, both at a ratio of 3 wt% with respect to a solid content of the polymer solution, a 200 µm coating film was produced in WET by using an applicator, and further the coating film was dried at 80°C for 5 minutes to obtain a coating film. A part of the obtained coating film was masked and was then temporarily cured by UV irradiation (1,000 mJ/cm²). Then, the coating film was immersed in pure water at room temperature for 5 minutes and washed with the pure water to remove the uncured part. Then, the coating film was baked at 150°C for 30 minutes, and a rubbing test and DMA measurement were carried out on the obtained cured film.

**[Table 5]**

| | Example 12 | Example 13 | Example 14 | Example 15 |
|---|---|---|---|---|
| Tack after temporary curing | No | No | No | No |
| Water developability | ○ | ○ | ○ | ○ |
| Xylene rubbing | ○ | ○ | ○ | ○ |
| Inter-crosslinking point molecular weight | ○ | ○ | ○ | ○ |
| Coating film appearance | ⊚ | ⊚ | ⊚ | ⊚ |

Water developability was evaluated as × for one having a washing residue and ○ for one having no washing residue after washing with the tetramethylammonium hydroxide solution or pure water,.

### Synthesis Example 15

90 parts of methyl chloroacetate, 130 parts of potassium carbonate, and 250 parts of dimethylformamide were mixed, and 78 parts of methacrylic acid was added dropwise to the mixed solution at 30°C to 40°C. After completion of the dropwise addition, 8 parts of triethylamine was added and stirring was performed at 50°C for 4 hours. After completion of the reaction, the mixture was washed with 500 parts of water. 300 parts of toluene was added to the organic layer, and the organic layer was washed with 300 parts of water 4 times. The obtained organic layer was distilled under reduced pressure to obtain a monomer C.

### Synthesis Example 16

35 parts of methyl methacrylate (Light Ester M, a product manufactured by Kyoeisha Chemical Co., Ltd.), 25 parts of the monomer C, 30 parts of 4-hydroxybutyl acrylate, and 10 parts of styrene were mixed as a monomer mixed solution, and 5 parts of AIBN as an initiator was dissolved in xylene to prepare an initiator solution.

50 parts of xylene and 50 parts of butyl acetate were charged into a stirrable flask, and the monomer solution and the initiator solution were added dropwise while nitrogen was enclosed. A polymerization temperature at this time was 100°C. The dropwise addition was carried out for 2 hours, and further aging was carried out at 100°C for 4 hours. The obtained polymer solution was cooled, and then 7.2 parts of Karenz AOI (a product manufactured by Showa Denko K.K.) and 0.06 parts of Neostan U-820 (a product manufactured by Nitto Kasei Co., Ltd.) were added and reacted at 65°C for 5 hours to obtain a polymer solution J.

### Example 16

Zinc acetylacetonate, trioctylphosphine oxide, and Lunacure 200 (a product manufactured by DKSH Japan Co., Ltd.) were mixed with the polymer solution J all at a ratio of 3 wt% with respect to a solid content of the polymer solution, a 200 µm coating film was produced in WET by using an applicator, and further the coating film was temporarily cured at 100°C for 30 minutes. At this time, it was confirmed that a coating film without tack was obtained. Then, the coating film was subjected to UV irradiation (1,000 mJ/cm²) to obtain a cured film. A rubbing test and DMA measurement were carried out on the obtained cured film. Evaluation results for both the xylene rubbing test and the inter-crosslinking point molecular weight were B.

### Example 17

Zinc acetylacetonate, trioctylphosphine oxide, and Lunacure 200 (a product manufactured by DKSH Japan Co., Ltd.) were mixed with 9 parts of the polymer solution G and 1 part of the monomer C all at a ratio of 3 wt% with respect to a solid content, a 200 µm coating film was produced in WET by using an applicator, and further the coating film was dried at 80°C for 5 minutes and then temporarily cured by UV irradiation (1,000 mJ/cm²). At this time, it was confirmed that a coating film without tack was obtained. Then, the coating film was baked at 100°C for 30 minutes to obtain a cured film. A rubbing test and DMA measurement were carried out on the obtained cured film. Evaluation results for both the xylene rubbing test and the inter-crosslinking point molecular weight were B.

All of the curable resin compositions in Examples were excellent in storage stability without deterioration of the resin even in a case of being left at room temperature for 30 days or longer.

From the results of Examples, it is apparent that when the curable resin composition according to the present invention is used, curing can be performed in two stages. Further, it is apparent that such a method can be used in fields such as in-mold molding where a curable resin composition by dual cure is used.

Furthermore, during the process of using the curable resin composition according to the present invention, no substances that adversely affect the health of the human body are emitted as reaction byproducts.

### Industrial Applicability

The curable resin composition according to the present invention can be used in various coating material compositions and the like that require both a thermosetting property and active energy curability. The curable resin composition can also be used for coating applications such as hard coats by two-stage curing, adhesive applications of curing with heat after temporary adhesion by active energy rays, and peeling applications by heat. On the contrary, temporary adhesion by heat is also possible. Further, a patterning step with active energy rays can also be utilized.

## Claims

1. A curable resin composition comprising:
a resin component (A) containing a (meth)acryloyl group (a), a hydroxy group (b), and an alkyl ester group (c); and
an initiator (B).

2. The curable resin composition according to claim 1, wherein the resin component (A) contains a compound having two or more functional groups in one molecule.

3. The curable resin composition according to claim 1 or 2, wherein the resin component (A) essentially contains
a compound (A-1) containing all of the (meth)acryloyl group (a), the hydroxy group (b), and the alkyl ester group (c) in one molecule.

4. The resin composition according to claim 1 or 2, wherein the resin component (A) essentially contains
a compound (A-2) having two of the (meth)acryloyl group (a), the hydroxy group (b), and the alkyl ester group (c); and
a compound (A-3) having a functional group that is not present in the compound (A-2) among the functional groups (a) to (c).

5. The resin composition according to claim 1 or 2, wherein the resin component (A) essentially contains
a compound (A-4) having the (meth)acryloyl group (a);
a compound (A-5) having the hydroxy group (b); and
a compound (A-6) having the alkyl ester group (c).

6. The resin composition according to any one of claims 1 to 5, wherein the initiator (B) contains at least a transesterification catalyst.

7. The resin composition according to claim 6, wherein the initiator (B) further contains an active energy curing catalyst.

8. The resin composition according to any one of claims 1 to 7, wherein the resin component (A) is at least one compound selected from the group consisting of a radical copolymerized polymer, an addition and condensation type oligomer, and a low molecular compound.

9. A cured film obtained by curing the resin composition according to any one of claims 1 to 8 with heat and active energy rays.

10. A coating resin molded body, comprising:
a curable resin layer (2), wherein
the curable resin layer (2) contains
a resin component (A) containing a (meth)acryloyl group (a), a hydroxy group (b), and an alkyl ester group (c); and
an initiator (B).

11. A multilayer film, comprising:
a substrate film layer (1); and
a curable resin layer (2) formed on the substrate film layer (1), wherein
the curable resin layer (2) contains
a resin component (A) containing a (meth)acryloyl group (a), a hydroxy group (b), and an alkyl ester group (c); and
an initiator (B).
